(19) Europäisches Patentamt
European Patent Office
Office européen des brevets

(11) EP 3 904 870 B1

(12) EUROPEAN PATENT SPECIFICATION

(45) Date of publication and mention of the grant of the patent:
**03.05.2023 Bulletin 2023/18**

(21) Application number: **20172530.6**

(22) Date of filing: **30.04.2020**

(51) International Patent Classification (IPC):
***G01N 23/207*** *(2018.01)* ***G06T 5/00*** *(2006.01)*

(52) Cooperative Patent Classification (CPC):
**G01N 23/207**

# (54) METHOD FOR MEASURING AN X-RAY PATTERN OF A SAMPLE, WITH PARALLAX COMPENSATION

VERFAHREN ZUR MESSUNG EINES RÖNTGENMUSTERS EINER PROBE MIT PARALLAXKOMPENSATION

PROCÉDÉ DE MESURE D'UN MOTIF DE RAYONS X D'UN ÉCHANTILLON, AVEC COMPENSATION DE PARALLAXE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021 Bulletin 2021/44**

(73) Proprietor: **Bruker AXS GmbH
76187 Karlsruhe (DE)**

(72) Inventor: **MAURER, Christian
76187 Karlsruhe (DE)**

(74) Representative: **Kohler Schmid Möbus Patentanwälte Partnerschaftsgesellschaft mbB
Gropiusplatz 10
70563 Stuttgart (DE)**

(56) References cited:
**US-A1- 2005 002 550 US-A1- 2015 136 954
US-A1- 2018 188 190**

- **A. P. HAMMERSLEY ET AL: "Two-dimensional detector software: From real detector to idealised image or two-theta scan", HIGH PRESSURE RESEARCH, vol. 14, no. 4-6, 1 January 1996 (1996-01-01), pages 235-248, XP055362474, US ISSN: 0895-7959, DOI: 10.1080/08957959608201408**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 904 870 B1

## Description

The invention relates to a method for an acquisition of an x-ray pattern of a sample, in particular an x-ray diffraction pattern of a sample, with

a) irradiating the sample at a sample position with an x-ray beam, and detecting scattered or reflected x-ray radiation with a spatially resolving x-ray detector comprising a plurality of pixels, thus obtaining a set of intensity values,

wherein for each pixel, the x-ray detector comprises an x-ray sensitive spatial element, wherein element surfaces of the spatial elements are arranged in a common detector plane, and the spatial elements of the pixels extend normal to the common detector plane; and

wherein a local trajectory for each pixel is defined as the trajectory of x-ray radiation originating from the sample position and incident on the element surface of the respective pixel;

or providing a set of intensity values previously obtained for the sample as described above;

b) applying a correction procedure on the set of intensity values, thus obtaining a set of corrected intensity values.

Such a method is known from G. Huelsen et al., "Distortion calibration of the PILATUS 1M detector", Nuclear Instruments and Methods in Physics Research, Section A, Vol. 548, Issue 3, 21 August 2005, pages 540-554.

X-ray diffraction is a powerful analytical tool for chemical and structural analysis of samples. The sample is illuminated with an x-ray beam, the x-rays are diffracted in a characteristic way for the sample component, and the diffraction pattern of the sample is measured and analysed.

For detecting x-rays, a number of methods are known. For reasons of high dynamic range and low noise, so called hybrid detectors are often preferred. Here, an incoming photon hits a photocathode, where it triggers the generation of free electrons or "electron holes". Those electrons or holes are accelerated by a high voltage and finally a voltage pulse can be registered. In a hybrid detector, the photocathode is the x-ray sensitive spatial element. It should be noted that different materials may be chosen for the photocathode; often Si is chosen (Si-detector), which achieves a high absorption for commonly used Cu K$\alpha$ radiation. In case of a spatially resolving x-ray detector, the detector comprises a number of pixels that can be separately read out, with an x-ray sensitive spatial element belonging to each pixel. In most cases, the x-ray detectors have a flat design, with the element surfaces of the spatial elements of the different pixels being arranged in a common detector plane.

In recent years, higher spatial resolutions of x-ray detectors were requested by users, and pixel sizes have become smaller. In turn, the aspect ratios of the x-ray sensitive spatial elements have become larger. Typically, an x-ray sensitive element has a depth that is about 5 times as large as its width, or even larger.

If a flat detector design is used, this in general causes the x-ray detector to suffer from an intra-sensor parallax effect. In a typical measurement situation, diffracted x-ray radiation spreads radially from the sample at the sample position. While a part of the diffracted x-rays may hit the x-ray detector or its common detector plane practically perpendicularly, another part (generally the larger part) will hit the x-ray detector or its common detector plane at an incidence angle $\gamma$ (measured against the surface normal) deviating significantly from 0° ("slanted incidence"). For example, an x-ray detector having a radius corresponding to the distance of the detector from the sample position will show incidence angels as high as 45°. An x-ray photon of slanted incidence that enters an x-ray sensitive spatial element of a particular pixel at its element surface does not only pass through this spatial element, but passes also through a number of further x-ray sensitive spatial elements of neighbouring pixels. The photon may be detected in the spatial element whose element surface it crossed, but may alternatively also be detected in one of the further spatial elements it crosses when passing through the x-ray detector.

This means that the detection of the photons entering the x-ray detector at the element surface of an x-ray sensitive spatial element of a particular pixel becomes smeared, what complicates the analysis of the measured x-ray pattern. In particular, so called center of mass of the detected signal is shifted, as a consequence of the parallax effect, somewhat towards the outside.

There have been some approaches to alleviate this sensor intrinsic parallax problem. One technical approach is to use higher absorbing materials for the x-ray sensitive spatial elements in an x-ray detector, for example CdTe. This would allow a reduction of thickness of the x-ray detector (i.e. of the depth of the x-ray sensitive spatial elements), what in turn reduces the described parallax effect. However, these materials are still under development and thus often too expensive for the mass market. Further, these detector types can suffer from larger noise, and the parallax effect is finally only reduced, but not completely compensated for, and depending on the measurement geometries it remains a significant data quality compromising effect.

Geometric compensation is also known from A. P. HAMMERSLEY ET AL: "Two-dimensional detector software: From real detector to idealised image or two-theta scan", HIGH PRESSURE RESEARCH, vol. 14, no. 4-6, 1 January 1996, pages 235-248, US.

In US 9 835 571 B2, an x-ray detector comprises a plurality of flat detector elements arranged on a flexible substrate. The substrate can be bent such that the detection surfaces of the detector elements extend along a tangent line of the diffraction circle. Further, spherically curved x-ray detectors are known for gas based detectors. Spherical or quasi-spherical detectors minimize the parallax effect, but are specific for only a single sensor to sample distance, what limits applicability. Gas based detectors are inferior as compared to hybrid detectors with respect to energy range, dynamic range and noise. A flexible substrate is particularly difficult to handle and to align accurately. Other geometric corrections are known from US 9,897,559 B2, but the sensor intrinsic parallax effect has not been accounted for.

For data of selected applications, it is further known to apply a compensation algorithm to account for the parallax effect. G. Huelsen et al., "Distortion calibration of the PILATUS 1M detector", mentioned above, suggest to calculate the center of mass shift due to the parallax effect, and to shift detected signals back accordingly.

Huelsen's approach works fine for solitary standing single diffraction reflexes (as seen in single crystal diffraction applications), but cannot separate superimposed and merged signals (as seen from classical powder analysis). Further, signal intensities cannot be accurately corrected, and re-gridding artefacts may worsen the data sharpness.

In the internet publication "Pilatus on a goniometer at ID28", downloaded on Nov 4th, 2019 on:https://pyfai.readthedocs.io/en/latest/usage/tutorial/ThickDetector/goniometer_i d28.html

it is suggested to model the behaviour of an x-ray detector, wherein a raytracing approach was used, and to deconvolute a thickness effect of the detector, in order to obtain corrected images. However, the authors of this publication concluded that their method did not lead to an enhancement of data quality in terms of peak positions or FWHM.

A technique for processing x-ray diffraction data, wherein x-ray diffraction data is distinguished from the background, is known from EP 3 561 496 A1.

## Object of the invention

It is the object of the present invention to provide a method for acquisition of an x-ray pattern of a sample of improved quality, in particular which has an improved compensation of intra-sensor parallax effects.

## Short description of the invention

This object is achieved, in accordance with the invention, by a method as introduced in the beginning, characterized in

that the correction procedure comprises a plurality of correction steps, wherein each correction step is assigned to a working pixel,

with a respective correction step comprising for each of a number of neighbouring pixels of the working pixel,

- calculating a correction value which depends on the intensity value of the working pixel and further depends on a detection probability in the spatial element of the respective neighbouring pixel of x-ray radiation originating from the sample position and incident on the element surface of the spatial element of the working pixel,
- subtracting the correction value from the intensity value of the neighbouring pixel,
- and adding the correction value to the intensity value of the working pixel,

that the correction procedure begins with a correction step for the pixel of the x-ray detector being closest to a point of normal incidence of the common detector plane as working pixel,

and that the correction step is applied iteratively to further pixels of the x-ray detector, wherein a pixel may only become the next working pixel in a next correction step if all direct neighbour pixels of this next working pixel

which have a local trajectory intersecting the spatial element of this next working pixel have already been working pixels in a previous correction step.

The present invention suggest to sort intensity contributions belonging to x-ray photons that have entered the x-ray detector at the element surface of an x-ray sensitive element of a particular pixel, but have been detected (measured) in a the x-ray sensitive spatial element of a neighbouring (radially outward) pixel which intersects the local trajectory of the particular pixel, back into the intensity value of said particular pixel. The corresponding intensity contribution ("correction value") is subtracted from the intensity value of the respective neighbouring (radially outward) pixel, and added to the intensity value of said particular pixel. A particular pixel (or "working pixel") receives intensity contributions from all neighbouring (radially outward) pixels whose x-ray sensitive spatial element intersects with the local trajectory of x-ray radiation of this particular pixel.

This sorting procedure is done for all pixels of the x-ray detector of interest. In this way, the x-ray pattern may be sharpened, and the final (corrected) intensity values correspond to the original intensity of the scattered or reflected x-ray radiation in the common detector plane, i.e. immediately before entering the x-ray detector. When applying the inventive method the detector has effectively an "infinitesimal" thin detector thickness.

In order to obtain accurate corrected intensity values, the sorting procedure, i.e. the corrections steps, are done iteratively, i.e. (in general all) the pixels of the x-ray detector become the so called "working pixel" consecutively.

Intensity detected (measured) for a particular pixel may originate either from photons having entered the detector at the element surface of the spatial element of this particular pixel ("direct intensity"), or from photons having entered the detector at a neighbouring (radially inward) pixel whose local trajectory intersects the spatial element of the particular pixel ("spilled intensity"). However, only the direct intensity at a particular pixel is relevant for determining the spilled intensities caused at neighbouring (radially outward) pixels of this particular pixel.

By doing the sorting procedure iteratively, it is possible to first remove the spilled intensity from the intensity value of a particular pixel before the intensity value of this pixel is used for determining spilled intensities caused at neighbouring (radially outward) pixels of this particular pixel.

For this purpose, the procedure starts with the pixel of the x-ray detector which is closest to the point of normal incidence of the common detector plane. The point of normal incidence (or "PONI") is the location on the common detector plane where the normal of the common detector plane intersects the sample position. The starting pixel has the fewest possible share of spilled intensity. It generally is the radially innermost pixel with respect to the PONI. Note that sometimes there may be plurality of closest pixels that are equally close to the PONI, then any one of them may be used as starting pixel, and typically all these equally close pixels are processed as working pixels before other pixels are processed ("plurality of starting pixels"). After that, a pixel may only become the next working pixel if all its direct (in particular inward) neighbour pixels, which have a local trajectory intersecting the spatial element of the next working pixel, have already been working pixels. Note that sometimes, there may be pixels that do not have any direct neighbours whose local trajectories intersect the spatial element of this pixel, then these pixels may become working pixels immediately, without further prerequisites; in general such pixels are all starting pixels.

This criterion for the first working pixel and the next working pixels leads, in general, to a processing of the pixels as working pixels radially from inside out, for example in the form of a spiral. After all pixels designated for the correction procedure have been processed as working pixels, the resulting set of corrected intensity values corresponds to the (corrected) x-ray pattern of the sample. It should be mentioned though that apart from the sensor parallax compensation measures, further correction measures may be applied to the set of intensity values, to take into account other undesired effects (see further below).

In general, for a particular pixel (e.g. next working pixel), its direct neighbour pixels having a local trajectory intersecting the sensitive spatial element of that particular pixel, i.e. neighbour pixels which shadow the spatial element of that particular pixel at least partially with their respective element surface, are located (radially) inward with respect to the point of normal incidence.

For each pixel, the x-ray detector comprises an x-ray sensitive spatial element as well as electrical contacts and connections needed for operating and in particular separately reading out each pixel of the x-ray detector, to obtain a spatially resolved intensity information. The x-ray detector is preferably a hybrid type detector, but may also be of any other quasi-pixelated type, such as a gas type detector.

The correction values depend, above all, on the geometry of the detector and the experimental setup, in particular the dimensions of the x-ray sensitive spatial elements, including their aspect ratio, furthermore the local angle of incidence (relative to the detector plane normal) of the x-ray radiation originating from the sample (with said angle depending on the distance of the incident pixel to the point of normal incidence and the tilt of the common detector plane, if any), and the absorption efficiency (or the absorption coefficient) of the material of the sensitive spatial elements at the main wavelength of the x-ray beam.

*Preferred variants of the inventive method*

A preferred variant of the inventive method is characterized in

that the x-ray detector is a 1-dimensional detector, with its pixels arranged along an x-axis,

that for the given setup of the sample position, the x-ray detector and the main wavelength of the x-ray beam, the correction values are calculated using a correction matrix $C_i(x)$ for each working pixel at position x, with x: pixel index with respect to the x-axis, i: neighbouring pixel index with respect to the x-axis,

and that within a respective correction step, the intensity values are recalculated applying matrix calculations as follows:

$$D(x) := D(x) + \sum_i [D(x+i) * C_i(x)]$$

and

$$D(x+i) := D(x+i) - [D(x+i) * C_i(x)],$$

with D(x): intensity value at position x,
wherein i is iterated through the number of neighbouring pixels of the working pixel. The matrix calculation is relatively easy to do; the correction values result from a matrix multiplication of the intensity value matrix D(x) and the correction matrix $C_i(x)$. The correction matrix $C_i(x)$ represents the given setup and can be calculated independently from the intensity values D(x), in particular prior to the measurement, what allows a particularly fast calculation once the intensity values D(x) are available. A 1-dimensional detector is further relatively inexpensive, and fully sufficient for characterizing a sample which shows an x-ray pattern of rotational symmetry.

An alternative, advantageous variant is characterized in

that the x-ray detector is a 2-dimensional detector, with its pixels arranged along an x-axis and a y-axis which are perpendicular to each other,
that for the given setup of the sample position, the x-ray detector and the main wavelength of the x-ray beam, the correction values are calculated using a correction matrix $C_{ij}(x, y)$ for each working pixel at positions x, y, with x: pixel index with respect to the x-axis, y: pixel index with respect to the y-axis, i: neighbouring pixel index with respect to the x-axis, j: neighbouring pixel index with respect to the y-axis,
and that within a respective correction step, the intensity values are recalculated applying matrix calculations as follows:

$$D(x,y) := D(x,y) + \sum_{i,j} [D(x+i, y+j) * C_{ij}(x,y)]$$

and

$$D(x+i, y+j) := D(x+i, y+j) - \left[D(x+i, y+j) * C_{ij}(x,y)\right],$$

with D(x, y): intensity value at positions x and y,
wherein i and j are iterated through the number of neighbouring pixels of the working pixel. The matrix calculation is relatively easy to do; the correction values result from a matrix multiplication of the intensity value matrix D(x, y) and the correction matrix $C_{ij}(x, y)$. The correction matrix $C_{ij}(x, y)$ represents the given setup and can be calculated independently from the intensity values D(x, y), in particular in advance (before a measurement), what allows a particularly fast calculation once the intensity values D(x) are available. With a 2-dimensional detector a sample which shows an x-ray pattern without rotational symmetry can be characterized.

A preferred further development of the above method provides that the point of normal incidence defines the origin of the x-axis and the y-axis, that the pixels of the x-ray detector comprise four quadrants of pixels separated by the x-axis and the y-axis,
and that correction values are only calculated for a selected quadrant, in particular for the largest quadrant, and correction values for the other quadrants are mirrored from the selected quadrant. In this further development, the calculation of the correction procedure is accelerated exploiting the symmetry of the setup if the point of normal incidence is located on the x-ray detector.

In another further development using the above explained matrix calculation, each correction matrix $C_i(x)$ is an nx1 matrix or each correction matrix $C_{ij}(x, y)$ is an nxn matrix, with n being an odd integer,

in particular wherein n=3 for including a correction only of next neighbour pixels of the working pixel,
or in particular wherein n=5 for including a correction only of next neighbour pixels and next but one neighbour pixels of the working pixel. Typically, n should be chosen large enough such that "cut off" detection probabilities are smaller than a chosen limit value for all pixels, i.e. even for the "worst case" pixel, which is typically the pixel being farthest away from the point of normal incidence. The limit value is typically chosen such that the cut off detection probability is e.g. 5% or less, often 1% or less, preferably 0,2 % or less (as compared to the overall intensity of the local trajectory).

In another preferred further development, the correction procedure skips calculation steps where a value of a correction matrix $C_i(x)$ or $C_{ij}(x, y)$ is below a threshold $C_{thr}$. This simplifies and accelerates the correction procedure. If a value of the correction matrix is below the threshold, the formulas for new calculation of intensity values D(x) or D(x,y) are not applied, i.e. the corresponding summand in the formula is dropped. The value of the correction matrix represents a relative detection probability in the respective neighbouring (radially outward) pixel of a particular pixel, if the x-ray radiation enters the x-ray detector at the element surface of said particular pixel.

Preferably, $C_{thr}$ is chosen with

$$C_{thr} \leq 5\%,$$

preferably $\leq C_{thr} \leq 1\%$,
more preferably $C_{thr} \leq 0{,}2\%$,
most preferably $C_{thr} \leq 0{,}1\%$. The smaller the threshold is chosen, the more accurate the correction procedure will be. With a limit of $C_{thr} \leq 5\%$, already a significant improvement in x-ray pattern quality as compared to a non-corrected case can be achieved.

In a preferred variant using correction matrices, the correction procedure comprises an additional correction step for the intensity values D(x) or D(x,y) with

$$D(x) := \frac{D(x)}{\sqrt{1 + tan^2(\gamma_x)}}$$

or

$$D(x,y) := \frac{D(x,y)}{\sqrt{1 + tan^2\left(\gamma_{xy}\right)}}$$

with $\gamma_x$: angle between the local trajectory and the normal of the common detector plane for the pixel at position x with respect to the x axis, or with $\gamma_{xy}$: angle between the local trajectory and the normal of the common detector plane for the pixel at position x, y with respect to the x-axis and y-axis,
in particular wherein the additional correction step is done after the plurality of correction steps. Note that the angle $\gamma_x$ or $\gamma_{xy}$ ("incidence angle") correspond to 90° minus the angle of the radiation with respect to the common detector plane. X-ray radiation having an incidence angle ($\gamma_x$ or $\gamma_{xy}$) significantly deviating from 0° ("slantly incoming radiation") propagates along a longer path through the x-ray detector or the thickness of its x-ray sensitive elements, as compared to x-ray radiation hitting the common detector plane perpendicularly ("perpendicular radiation"). This leads, in general, to a higher overall absorption in the detector for the slanted incoming radiation as compared to perpendicular (normal) radiation. This effect distorts the ratios of intensities. According to the variant, the intensity values for the pixels are generally reduced depending on the incidence angles, with the reduction being larger for larger incidence angles. As a result, correct ratios of intensities are obtained in the set of corrected intensity values. Note that the additional correction step is unnecessary if incoming radiation is complete absorbed in the sensitive elements even for the perpendicular radiation geometry.

A preferred variant provides that each spatial element of the x-ray detector has structural dimensions $w_x$, $w_y$, $w_z$ with respect to a Cartesian system comprising x-axis, y-axis in the common detector plane and z-axis perpendicular to the common detector plane, and that the correction values are derived taking into account a spatial overlap between

- a structural volume of the spatial element of the respective neighbouring pixel with dimensions $w_x$ x $w_y$ x $w_z$, and
- a structural absorption volume defined by the projection of the element surface with dimension $w_x$ x $w_y$ of the spatial element of the respective working pixel along its local trajectory. This approach is relatively easy to do, and is based on the commonly used charge sharing threshold (or energy discrimination threshold) of 50%, which just prevents double counting. With this threshold, a photon causing a charge cloud spreading over two (or even more) spatial elements will only be counted for a pixel if more than 50% of the charge cloud (or corresponding energy) of the event is detected in the spatial element of the pixel. Here, a maximum number of events may be counted without causing distortions by double counting.

Particularly preferred is a variant providing that

each spatial element of the x-ray detector has structural dimensions $w_x$, $w_y$, $w_z$ with respect to a Cartesian system comprising x-axis, y-axis in the common detector plane and z-axis perpendicular to the common detector plane, and that the correction values are derived taking into account a spatial overlap between

- an effective volume of the spatial element of the respective neighbouring pixel with dimensions $w_x^{eff}$ x $w_y^{eff}$ x wz, and
- an effective absorption volume defined by the projection of an effective element surface with dimension $w_x^{eff}$ x $w_y^{eff}$ of the spatial element of the respective working pixel along its local trajectory,

wherein the effective element dimensions $w_x^{eff}$, $w_y^{eff}$ are reduced as compared to the structural element dimensions $w_x$, $w_y$,
in particular wherein the effective element dimensions $w_x^{eff}$, $w_y^{eff}$ are chosen such that their reduction as compared to the structural element dimensions $w_x$, $w_y$ reflects a blind region between adjacent x-ray sensitive spatial elements due to application of a charge sharing threshold above 50% in the x-ray detector. With this approach, a more accurate correction procedure may be achieved if a charge sharing threshold (or energy discrimination threshold) above 50% is applied, what is done in particular of a finer resolution of the x-ray pattern is desired. The higher threshold leads to a "blind regions" in the spatial elements, i.e. photons triggering electrons close to the side faces of an x-ray sensitive spatial element will not be counted if too much of the charge cloud (or corresponding energy) is spread into other spatial elements, and the variant may take these blind regions into account for calculating the correction values (or the values of the correction matrices, respectively).

Further preferred is a variant wherein the correction values are derived taking into account a decreasing, in particular exponentially decreasing, intensity of the x-ray radiation due to absorption within the spatial elements along the local trajectory of the working pixel. This makes the correction procedure more accurate; typically, the decrease of intensity is taken into account in a slice model, wherein the intensity being present in each slice decreases with increasing depth. Note that for relatively thin x-ray detectors, or x-ray detectors having weakly absorbing material of the spatial elements, the decrease of intensity along the beam path in the detector may be negligible.

A particularly preferred further development, applying spatial overlap of a structural or effective volume and a structural or effective absorption volume, and further taking into account a decreasing intensity along the local trajectory, is characterized in

that the x-ray detector is divided into a series of N slices having a thickness $d=w_z/N$, with $w_z$: dimension of the spatial element with respect to a z-axis perpendicular to the common detector plane and N: number of slices,
and that the spatial overlap between the structural or effective volume of the spatial element and the structural or effective absorption volume is calculated in each slice separately, and absorption of x-ray radiation is calculated for each slice separately taking into account the absorption of x-ray radiation in previous slices already traversed by the x-ray radiation. This further development allows a highly accurate correction procedure, and is comparably simple to put into practice. Note that in general, at least N=20 slices are used.

Preferably, the thickness d of the slices is chosen such that the relative absorption of each slice is less than 5%, preferably less than 1%, more preferably less than 0,2%, most preferably less than 0,02%, as compared to the total intensity of the x-ray radiation incident on the working pixel. The lower the relative absorption per slice, the more accurate the calculation will be. If the relative absorption is less than 5%, as compared to the total intensity of the x-ray radiation incident on the working pixel or its element surface, respectively, already a high accuracy of the correction procedure can be achieved.

Further preferably, the spatial overlap is calculated by projecting the structural or effective volumes of the spatial elements and the structural or effective absorption volumes in each slice into a respective surface in the middle of each slice in z-direction, and calculating the overlap of the projections. This simplifies the calculation of correction values, or values of correction matrices, significantly.

In another advantageous variant, applying correction matrices and matric calculations for obtaining the correction values, for the given setup of sample position, x-ray detector and the main wavelength of the x-ray beam, the correction matrices $C_i(x)$ or $C_{ij}(x, y)$ are calculated once and are applied to a plurality of sets of intensity values D(x) or D(x,y) measured with the same sample and/or different samples within the given setup. This speeds up the correction procedure enormously, and a practically unlimited number of sets of intensity values (i.e. measurement results) can be transformed into corrected intensity values, or corrected x-ray patterns, respectively, very fast. Note that the correction matrices for the given setup may be calculated in advance, i.e. prior to the measurement of the sets of intensity values in a step a), such that step b) can be accelerated. However, it is also possible to first measure the intensity values in a step a), and then calculate the correction matrices and apply the correction step b), in particular for sharpening and/or position correction of archived measurement data. Note that for some post processing techniques, in particular techniques applying overlapping and/or merged individual measurements or techniques described in US 9,897,559 B2, the inventive method (data correction) may have to be applied at the measurement, and in particular before continuing with those post processing techniques.

Drawing

The invention is shown in the drawing.

Fig. 1 shows a schematic illustration of a smeared signal detection for a single slanted x-ray beam, in a 1D case, with center of mass shift correction of the state of the art;

Fig. 2 shows a schematic illustration of a smeared signal detection for a two closely neighbouring slanted x-ray beams, in a 1D case, with center of mass shift correction of the state of the art not being able to resolve the individual signals;

Fig. 3 shows a schematic illustration of a signal detection for a two closely neighbouring slanted x-ray beams, in a 1D case, with pixel specific reassignment of registered energies according to the invention being able to resolve individual signals;

Fig. 4 shows a schematic illustration of an exemplary variant of the inventive method, indicating the evaluation order in a 2D case;

Fig. 5 shows a schematic illustration of shift of registered energy, by geometric effect only, for the invention;

Fig. 6 shows a schematic illustration of shift of registered energy, by geometric effect and absorption effect, at low absorption, for the invention;

Fig. 7 shows a schematic illustration of shift of registered energy, by geometric effect and absorption effect, at high absorption, for the invention;

Fig. 8 shows a schematic illustration of an iterative solution for the establishment of the correction matrix based on simple geometric operations (2D projection and area calculations), for the invention;

Fig. 9 shows a schematic illustration of a projection of a local trajectory into 3D, with exponential gradients, for the invention;

Fig. 10 shows a schematic illustration of an energy threshold on effective pixel size (effective dimensions of the x-ray sensitive spatial elements), for the invention;

Fig. 11 shows a schematic illustration of the effective thickness compensation, for the invention;

Fig. 12 shows a schematic flowchart for an inventive compensation procedure, including sensor parallax compensation and effective sensor thickness compensation;

Fig. 13 illustrates an exemplary x-ray detector setup for the invention, in schematic plan view, for a 1D detector;

Fig. 14 illustrates an exemplary x-ray detector setup for the invention, in schematic perspective view, for a 2D detector, with a transmission-geometry measurement setup;

Fig. 15 illustrates an exemplary x-ray detector setup for the invention, in schematic perspective view, for a 2D detector, with a reflection- geometry measurement setup.

*Background and overview of the invention*

In classical XRD experiments, hybrid pixel detector technologies are used more and more - in 1D but also in 2D. These detectors are preferred due to their large dynamic range and low noise. The technological advancements lead to a strive for smaller and smaller pixel sizes over the last years, while the sensor thickness due to absorption maximization stays constant. While changing the aspect ratio from previously almost 1 to 1 ratio for pixel depth (depth $w_z$ of the x-ray sensitive spatial volume belonging to a pixel) to pixel width (with $w_x$ or width $w_y$ of said spatial element), to currently typical factors of 5 to 1 and more, these sensors suffer from an intra-sensor parallax effect.

Non-normal illumination (slanted) x-ray photons entering the sensor surface statistically may be absorbed in several neighbouring pixels that are traversed (intersected) by the trajectory of the photon. When evaluating a multitude of photon absorptions the true point of incidence on the surface of the detector is virtually shifted, when calculation is based on center of mass evaluation.

The sensor parallax effect is lower at lower x-ray energies like Cr, Co, Cu radiation, since the absorption of standard sensor materials is higher. Widely used technologies employ Si-Sensors optimized for absorption maximization for Copper radiation. With large sample to detector distances and large pixels/stripes the sensor parallax effect usually can be neglected.

The sensor parallax effect becomes influential for x-ray energies like Ga, Mo, Ag and higher atomic weight radiation. Here standard (Si) sensor materials have a lower absorption coefficient, thereby leading to a longer absorption length of x-rays. In result a plurality of x-ray photons incident on the effective area (element surface of the spatial element) of one pixel are registered in several pixels, thereby leading to a virtual shift of the point of incidence.

**Fig. 13** illustrates the general measurement setup on which the present invention is based, in a schematic view, for a 1D situation. An x-ray source 130 illuminates a sample 131 at a sample position 131a with an x-ray beam 132. X-ray radiation 135 is scattered or reflected by the sample 131; as an example, two x-ray beams 133, 134 originating from the sample position 131a are illustrated.

In the example shown, a non-deflected x-ray beam 133 hits a spatially resolved x-ray detector 5 perpendicular to a common detector plane DP of x-ray sensitive spatial elements 2a-2n, which represent the pixels p(x) of the x-ray detector 5. In other words, the beam 133 is in parallel to a surface normal SN of the common detector plane DP; the direction of the x-axis is perpendicular to the surface normal SN. Beam 133 hits here at element surface 4a of spatial element 2a, namely at the point of normal incidence (=PONI) 40. In contrast, x-ray beam 134 is inclined by an angle of incidence (or incidence angle) $\gamma_x$, measured between the beam direction of beam 134 and the surface normal SN. Depending on the wavelength of the x-ray radiation 135, the radiation 135 is absorbed in differently large areas of the x-ray-detector 5. Soft x-rays are absorbed in a comparably small area (see dashed markings), and affect only one spatial element 2a-2n even for large incident angles here. Then, only one pixel p(x) will register radiation. In contrast, the area for hard x-rays (see dashed-dotted marking) is reaching deeper, and in particular for the beam 134 far enough to extend through three spatial elements 2k, 2l, 2m here. Accordingly, registered intensity is spread over a multitude of neighbouring pixels, here pixels p(b), p(b+1) and p(b+2) for beam 134. This phenomenon is the senor intrinsic parallax effect.

**Fig. 14** illustrates a corresponding measurement setup for a 2D case, on which the invention is based, for a transmission-geometry measurement setup. The x-ray detector 5 comprises a plurality of pixels p each with an x-ray sensitive element having their element surfaces in a common detector plane DP (corresponding to the xy plane). The pixels p are arranged in a grid aligned with the x-axis and the y-axis. The spatial elements of the pixels p extend in z-direction perpendicular to the xy-plane. Radiation 133 aligned perpendicular to the common detector plane DP, arriving at the point of normal incidence (PONI) 40, does not suffer from parallax effect. In contrast, radiation 134 having a non-zero angle $\gamma_{xy}$ with respect to the surface normal SN may suffer from the parallax effect.

A measurement setup for a 2D case in accordance with the invention can also be based on a reflection-geometry measurement setup, as shown in **Fig. 15,** which largely corresponds to the setup shown in Fig. 14. As a difference, the x-ray radiation beam 133 hitting the detector 5 or its detector plane DP perpendicularly is reflected at the sample 131. X-ray radiation beam 134, also reflected at the sample 131 and having an angle $\gamma_{xy}$ with respect to the surface normal SN, will undergo the sensor intrinsic parallax effect.

The present invention solves the problem to reliably calculate the true point of incidence of x-ray photons on a detector with a certain aspect ratio of pixel dimensions (dimensions of the x-ray sensitive spatial elements), a certain absorption coefficient of the detector material (material of the spatial elements) and under certain angles of incidence of the x-ray photons.

It should be understood there is a correlation between these parameters: a low absorption coefficient does not affect the calculation of the point of incidence by the center of mass too much if the aspect ratio of pixel dimensions is low and/or the maximum angle of incidence on the detector is low (which may occur if detector sample distance is high).

With the presented approach the sensor efficiency deviations and charge sharing effects can also be accounted for, increasing data accuracy even further.

*Handling of the parallax effect in the state of the art*

In the state of the art, a number of approaches to handle the parallax effect are known.

1) Technology: Flat detectors made from highly absorbing materials such as scintillator or hyprid-pixel sensors made from CdTe reduce the thickness of the sensor and therefore also the sensor parallax effect. These detectors however suffer from larger noise (scintillators have to be coupled to CCDs or CMOS sensors) or have technological imperfections which reduces the applicability in XRD experiments. CdTe and other High-Z materials are catching up recently but are not yet able to eliminate the effects completely.

2) Geometrically: To avoid the effects a spherical, or quasi-spherical detector (an approximation by small flat detectors arranged in an arc) can be employed (see e.g. Fig. 2A in US 9 835 571 B2). Here the angle of incidence is always at least close to normal for all given readout elements. Current technologies that enable these geometries are gas based detectors, these however are inferior compared to hybrid pixel technologies of flat hybrid pixel sensors due to limits in energy range, dynamic range and noise. A tiled architecture minimizing the effects of geometric parallax is possible but will always stay limited for a single sensor to sample distance, a limitation that drastically reduces the applicability of the detector system. Geometric corrections to account for projection artefacts are in place by now (see 2D scanning Patent of Bob He et al., US 9,897,559 B2), but the sensor intrinsic effects have yet to be accounted for.

3) Algorithmically: Compensation algorithms exist. Based on a center-of-mass-shift approach they allow a calculation of the resulting shifts of data signals. This approach does shift the entire smeared signal and results in an accurate 'center' recognition but it remains limited in the fact that overlaying signals still cannot be separated and that signal intensities still remain uncorrected. Sole standing signals can be properly corrected for (like singular reflections in single crystal (=SC)-XRD experiments), but not a multitude of close or even overlapping signals in e.g. phase ID XRD experiments. The evaluation of diffraction rings as typical for powder diffraction experiments becomes a problem for these algorithms.

The classic (state of the art) sensor parallax compensation is working with a so called center-of-mass-shift approach (see Hülsen et al. 2005). It is valid for 2D and also a 1D detectors.

**Fig. 1** illustrates the application of a center of mass compensation of the state of the art in a schematic simulated 1D experiment. A slant X-ray radiation beam 1 from a sample hits an x-ray detector 5, comprising a plurality of x-ray sensitive spatial elements 2a-2j arranged in a row along the x-axis, here at the element surface 4b of spatial element 2b, see partial picture (a). The local trajectory 3 of the x-ray radiation beam 1 crosses the spatial elements 2b, 2c, 2d, 2e and 2f here. Partial picture (b) illustrates the intensity I registered in the different spatial elements 2a-2j (or the corresponding pixels). Most intensity is registered for spatial element 2b, but there is also some intensity registered in spatial elements 2c, 2d, 2e and 2f. If the position where the x-ray radiation beam 1 hit the detector 5 is determined by determining the center of mass 6 of the measured intensity, this position will be determined to be about at the border of spatial elements 2b and 2c, and not in the middle of spatial element 2b; this difference is the "center of mass shift" MS caused by the parallax effect. In the state of the art compensation mechanism, the measured intensities are shifted back by an amount corresponding to the center of mass shift MS, see partial picture (c). After this back-shifting, the new center of mass 8 is identical with the position where the x-ray beam 1 hit the detector 5, i.e. the middle of spatial element 2b. Typically, a "re-griding" of the shifted intensities into the pixels is done, here into the pixels of spatial elements 2a-2f, compare partial picture (d), and this may additionally smear the signal.

But for overlapping signals, this type of compensation will not separate the previously smeared data (as all neighbouring elements or intensities are shifted by almost the same amount). The center of mass will then be correct, but overlapping signals remain smeared into each other, and depending on implementation might suffer from re-gridding smearing:

In **Fig. 2,** the application of the center of mass compensation of the state of the art is illustrated for two x-ray radiation beams 1, 9 in close vicinity. Partial picture (a) shows for the simulation of this 1D simplification the two incident signals (or x-ray radiation beams 1, 9) hitting the detector 5 at a certain (slant) angle. The resulting intensity (I) measurement shown in the partial picture (b) shows a clear smearing of the (overlapping) signals and the shift of the center of mass towards a neighbouring pixel on the left (see Fig. 1 above). After back-shifting the center of mass shift MS, the intensities I of the two signals (or x-ray radiation beams 1, 9) are still overlapping, compare partial picture (c). After re-gridding, see partial picture (d), the smearing may even be worse.

*Basic idea of the present invention*

The inventive method presented here iteratively calculates and corrects for shifts and sorts signals (intensities) according to their origin while separating the overlapping signals as depicted in Fig. 3, further explained below.

Furthermore with a few adjustments it can also correct for signal intensity overrepresentations due to differing effective thicknesses and/or allow for an accounting of losses in intensity due to increased charge sharing effects at non-standard energetic threshold settings parameters (other than the classic 50% cut off).

The inventive compensation can be a post processing step for saved 1D as well as 2D datasets. It however can also be applied during a measurement to enhance scanned dataset resolution.

The core idea of the invention is to sort back all collected photons to the element (x-ray sensitive spatial element or pixel, respectively) of the sensor where the incident beam touched the surface of the detector. The algorithm thus projects the data back onto the surface plane yielding a virtually zero-depth sensor thickness. Hereby each spatial element (of 2D pixel type or 1D pixel/strip type) is analyzed and resorted individually in an ordered fashion (similar to the breadth first search methods employed in graph theories).

Please note that the term "pixel" is used here equivalently for a 1D or 2D structured detector element, i.e. a strip sensor would be 1D detector whereas a 2D detector would have a 2D array of detector elements.

**Fig. 3** illustrates in partial picture (a) again an x-ray detector 5 comprising, in this simplified 1D simulation, a number of x-ray sensitive spatial elements 2a-2j.

The element surfaces of the spatial elements 2a-2j are arranged in a common detector plane DP and arranged along the x-axis; element surfaces 4b and 4d are indicated by way of example. Two x-ray radiation beams 1, 9 hit the detector 5 at element surfaces 4b and 4d of spatial elements 2b and 2d. The local trajectory 3 of x-ray radiation beam 1 intersects spatial elements 2b, 2c, 2d, 2e and 2f. Further, the local trajectory 10 of x-ray radiation beam 9 intersects spatial elements 2d, 2e, 2f, 2g and 2h. Partial picture (b) illustrates the resulting intensities I in the corresponding pixels, which are distributed over the spatial elements 2b through 2h here.

According to the invention, intensity components are redistributed as illustrated partial picture (c). In the course of the inventive compensation method, based on the measured intensity at the first processed (innermost radiated) spatial element 2b, the intensity components resulting from the x-ray radiation beam 1 in the neighbouring (radially outer) spatial elements 2c, 2d, 2e and 2f are calculated ("correction values"), subtracted from the respective intensity values belonging to these spatial elements 2c, 2d, 2e, 2f, and added to the intensity value belonging to the spatial element 2b.

Then, the radially next outer spatial element 2c is processed. However, since after processing of the spatial element 2b no intensity remained for this spatial element 2c, the method effectively continues with the next radially outer spatial element 2d.

Based on the remaining intensity at the spatial element 2d, the intensity components resulting from the x-ray radiation beam 9 in the neighbouring (radially outer) spatial elements 2e, 2f, 2g and 2h are calculated ("correction values"), subtracted from the respective intensity values belonging to these spatial elements 2e, 2f, 2g, 2h, and added to the intensity value belonging to the spatial element 2d.

In the simplified example shown here, no intensities remain for the spatial elements 2e through 2j, so the method is effectively finished.

After the redistribution of the intensity components, the corrected intensity values shown in partial picture (d) result. There is only intensity for the pixels of spatial elements 2b and 2d, where the x-ray radiation beams 1, 9 hit the detector 5 at element surfaces 4b and 4d. The peaks of the x-ray radiation beams 1, 9 are sharp (not smeared) and separated, and integral intensities separate for each x-ray radiation beam 1, 9 are indicated.

*Correction matrices*

In practice, the invention typically applies correction matrices in order to establish the correction values required for the inventive correction procedure. This is explained in the following based on a 2D detector setup.

In a first step correction matrices $C_{ij}(x,y)$ for each spatial element (having a position x, y in the x-ray detector) of the measured diffraction pattern D(x,y) are established, for simplicity this can be a hypermatrix in the form of H(x,y,i,j), where i and j are the indices of the correction matrix.

Each correction matrix $C_{ij}(x,y)$ takes into account

- the local angle of incidence of the x-ray beam at the pixel element (i.e. at the element surface or common detector plane); this parameter depends on the distance between sample and detector-point-of-normal-incidence (PONI), the tilt angle of the detector surface with respect to the normal of incident x-ray beam, and the local position x, y;
- the absorption coefficient; this parameter depends on the used (monochromatic) x-ray wavelength and on the detector material (material of the x-ray sensitive spatial elements);
- the pixel aspect ratio (i.e. the ratio between depth and width for the spatial elements); this parameter depends on the geometric dimensions of the detector pixels (i.e. of the spatial elements); be aware modern detector arrays may contain under the single crystal a multitude of charge collecting pads establishing the pixel structure (structure of x-ray sensitive elements belonging to respective pixels) in the detector.

The correction matrix reflects the fact that a certain amount of the signal is registered in neighbouring pixels if an x-ray beam is incident on a detector pixel at an angle significantly different from 90° against the detector surface (i.e. if the "incident angle" measured between the beam and the surface normal is significantly different from 0°). The correction matrix shall describe the percentage distribution of counts normalized to $C_{ij}(x,y)$ for i=0 and j=0.

With S being the value of a given data point in D(x,y) (equivalent to the energy registered in the related pixel at coordinate x, y) and the conversion matrix H(x,y,i,j) it is possible to correct D(x,y) values looping over i and j. This may be done by 1) adding the value S*H(x,y,i,j) to D(x,y) in order to redistribute wrongly measured energies to their origin and 2) by subtracting the value S*H(x,y,i+1,j+1) from D(x+i,y+j), and S*H(x,y,i,j+1) from D(x,y+j), and S*H(x,y,i+1,j) from D(x+i,y), in order to subtract wrongly distributed energies from all neighbour data points of D(x,y).

*Sequence of correction steps*

Starting point is the initial data point D00 corresponding to the pixel with lowest angle of incidence of x-ray photons onto the sensor in the experiment (typically the PONI), and if mounted off-center the pixel closest to the PONI. From this initial data point the method proceeds and subsequently cleans all direct neighbour data points. In a next step all neighbours are corrected too. This process is done for the entire matrix D(x,y). This procedure can be carried out e.g. in form of a spiral thereby correcting the value that has been registered in neighbouring pixels, or, since mathematically independent, in all four quadrants of the data set simultaneously as the compensation task is symmetric to the PONI. This can also reduce calculation efforts of the correction matrix.

Edge effects may however occur at the periphery of the detector where the signal has been recorded only partially. Also if the point of normal incidence of x-ray radiation is not on the detector, one needs to start with the closest side or pixel leading also to an accurate result for most pixels, but this may lead to small edge effects at the beginning. Furthermore overcompensation may occur, i.e. a data point due to subtraction operations may results in a negative value, e.g. due to inaccurate modelling parameters or assumptions including sensor material deviations or non-perfect monochromatic incoming x-rays. This may be prevented by setting a lower threshold for a data value.

**Fig. 4** is an illustration of the sequence of correction steps of an exemplary variant of the inventive method in a 2D pixel array: In the example shown, the 2D pixel array is illustrated in the region close to the PONI 40 in schematic top view, wherein nine pixels in one quadrant are illustrated only, for simplicity; the calculations for all other quadrants may be mirrored. The pixels are arranged along an x-axis and a y-axis; depending on their position in x and y, there are the pixels P11, P12, P13, P21, P22, P23, P31, P32 and P33, compare the illustration of **step 0.** The pixels P11-P33 are indicated by the element surfaces of their x-ray sensitive spatial elements in the common detector plane at the detector surface. At the beginning of the procedure, all pixels P11-P33 or their respective intensity values are "original" (indicated by the thin pixel borders).

The correction procedure starts with the pixel closest to the PONI 40, i.e. here pixel P11 is the first working pixel WP (indicated by a hatching), compare illustration **step 1.** The PONI 40 is here at the lower left corner of the pixel P11. Pixel P11 has an exit footprint 41 (illustrated with a thin dashed box) on the bottom of the detector, and a local trajectory 3 (indicated with a thin dashed line, also called the geometric parallax footprint through the detector) belonging to pixel P11 linking the footprint 41 with the pixel P11 or its element surface, respectively. The local trajectory 3 (which reaches up to and thus includes the footprint 41) intersects with neighbouring (radially outer) pixels P12, P22 and P21.

In the first correction step, with pixel P11 as the working pixel WP, intensity belonging to radiation having entered the sensor at the element surface of pixel P11, but registered at pixels P12, P22, P21 is subtracted from these pixels P12, P22, P21, and added to pixel P11. After that, the correction is completed for pixel P11, what is indicted with a thick box around pixel P11.

In the example shown, pixels P12 and P21 are now ready for processing (indicated by a thick dashed box), i.e. they may become the next working pixel each, since all their direct neighbour pixels (and in fact here, all pixels) which have a local trajectory crossing this pixel P12 or P21 have already been working pixels. Here, pixel P11 is the only pixel which has a local trajectory 3 intersecting said pixels P12 or P21. Further, pixel P22 has only become partially processed (indicated with a thick dotted box), since pixels P12 and P21 have local trajectories intersecting pixel P22 (compare illustrations of step 2 and step 3), and these pixels P12 and P21 have not yet been processed as working pixel.

In the example shown, now pixel P12 is chosen to be the next working pixel WP (note that also pixel P21 could have been chosen), see illustration **step 2.** The local trajectory 3 of pixel P12 intersects pixels P13, P23 and P22. Accordingly, intensity belonging to radiation having entered the sensor at the element surface of pixel P12, but registered at pixels P13, P23, P22 is subtracted from these pixels P13, P23, P22, and added to pixel P12. By this means, pixel P13 has become ready for processing (since all its neighbouring pixels having a local trajectory intersecting this pixel P13, i.e. the pixels P11 and P12, have already been working pixels), and pixels P23 and P22 have been partially processed.

Then, pixel P21 is chosen to be the next working pixel WP (note that also pixel P13 could have been chosen), see illustration **step 3.** The local trajectory 3 of pixel P21 intersects pixels P31, P32 and P22. Accordingly, intensity belonging to radiation having entered the sensor at the element surface of pixel P21, but registered at pixels P31, P32, P22 is subtracted from these pixels P31, P32, P22, and added to pixel P21. By this means, pixels P31 and P22 have become ready for processing, and pixel P32 has been partially processed.

Then here, pixel P22 is chosen to be the next working pixel WP (note that also pixels P13 or P31 could have been chosen), see illustration **step 4.** The local trajectory 3 of pixel P22 intersects pixels P32, P23 and P33. Accordingly, intensity belonging to radiation having entered the sensor at the element surface of pixel P22, but registered at pixels P32, P23, P33 is subtracted from these pixels P32, P23, P33, and added to pixel P22. In this step, no new pixels have become ready for processing, and pixel P33 has been partially processed.

The procedure may then continue with pixel P31 or pixel P13 as next working pixel (no more illustrated), and so forth.

It should be noted that if the PONI 40 is centered on a pixel, this PONI pixel in general has a local trajectory that does not intersect with any other spatial element, and accordingly does not need to undergo a correction step. Further, there will be a number of "instantly processible" pixels directly neighbouring to the PONI pixel, which do not have an intersecting local trajectory of another pixel. These "instantly processible" pixels can be considered as functionally equally close to the PONI and then form a plurality of starting pixels, which can be processed in arbitrary order at the beginning of the correction procedure.

*On the calculation of values for the correction matrices*

In order to access how much of signal is spilled into neighbouring pixels the absorption of x-rays within these elements can be calculated for known (from literature, or if need may be from advance measurements) materials accordingly (e.g. with the help of CXRO Database or the according formulas and material coefficients). If a pixel is hit normal (perpendicular to the common detector plane) all energy is recorded in the same data point D(x,y). For tilted illumination, in general multiple elements can be affected. In the **Fig. 5** below the geometric area fractions of adjacent pixels belonging to spatial elements 2a-2e overlapping with a local trajectory 3 of an x-ray beam beam hitting the element surface of spatial element 2a in a 1D model are illustrated. In the example shown, about 34,7% of the local trajectory 3 intersects the original pixel or its spatial element 2a, about 51.8% intersects the next neighbour pixel (spatial element 2b), and 13,5% intersects the next but one neighbour pixel (spatial element 2c).

Unfortunately, the absorption effect is exponential and thus more complicated. Accounting for the real absorption this leads in the example to the intensity distribution shown in **Fig. 6** for in this case Si sensor and Cu radiation (it may be noted at this point that for the Si sensors with 450$\mu$m thickness illuminated with Ag radiation the effect is almost linear as the absorption coefficient is very low - such a model would in this case already be sufficient and much more rapidly calculated.). Here, about 76.8% of the intensity (registered energy) of radiation hitting the surface of a pixel is registered in this pixel (spatial element 2a), about 23,1% in the next neighbour pixel (spatial element 2b), and about 0,12% in the next but one neighbour pixel (spatial element 2c).

Above the result are calculated for Cu radiation. Due to the nature of the exponential effect the resulting shift is not as large as for the linear model (linear model is a worst case model).

In **Fig. 7,** the same hypothetical experiment is calculated for Mo-radiation, where the sensor parallax effect, i.e. its corresponding center of mass shift, is larger due the smaller absorption coefficients.

Also please note that the absorption is incomplete, for Cu it was 99.8% and for Mo only 47.5%. This already points towards the issue that for larger deviations of the angles of incidence from the normal, the effective path length increases in the sensor. The positive effect is that radiation which is not fully absorbed at normal incidence at non-normal incidence generates a higher effective signal as the x-ray beam passes through a longer path in the sensor. This effective thickness thus should be accounted for - this is discussed later on.

For very small sensor thicknesses the effect of x-ray absorption can be assumed to be linear. A virtual slicing of the sensor into multiple layers with thickness d allows to approximate the overall absorption accurately. This simplification helps to calculate how much of the incoming radiation is generating signal in which neighbouring pixels/elements.

This volume problem can be reduced by one dimension to an area problem. Given the local angle of incidence $\gamma_{xy}$ (measured between the incoming x-ray radiation 135 and the surface normal SN of the common detector plane DP) and the pixel elements surface area (area of the element surface), it is possible to project the surface area like a "shadow" into the subsequent layers in a thin sliced sensor. By calculating the shadow area fractions which fall into neighbouring pixels/elements at half-slice depth, the according linear and locally approximately constant signal deposition by absorption can be calculated for each slice.

This procedure is depicted in **Fig. 8.** Fig. 8 on the left illustrates the local trajectory 3 through a detector 5 that is virtually separated into slices S1-S9 with respect to the z direction (which is perpendicular to the common detector plane DP). The spatial overlap of the projected element surface 4a of spatial element 2a along the local trajectory 3 of spatial element 2a (i.e. its structural absorption volume 81) with said spatial element 2a or the neighbouring spatial elements 2b, 2c (or rather, its structural volume, compare ref. 82 for element 2a) is determined via a projection of the overlapping space into a surface (or plane) 80 in the middle of a respective slice (see magnification at the top right, for the top slice S1). In plan view (see insert right bottom) the overlap of the projections 81a (of the structural absorption volume 81) with involved spatial elements or their projections of their structural volumes (see ref. 82a for the projection of the structural volume 82 of spatial element 2a) can be determined easily (here 75% original pixel/element 2a, 15% to the neighbouring bottom pixel/ element 2o, 8 % to the neighbouring right pixel/element 2b, 2% to the diagonally neighbouring bottom right pixel/element 2p). The determined overlaps for each slice S1-S9 are weighted with the remaining intensity (after absorption in upper slices) for this slice in order to determine the values of the correction matrix.

Reduction of the signal registration to a simple, linear, geometric approximation (absorption = area covered) in combination with a thin-slice approach is the preferred method here. By calculating the travel length the absorption in this slice can be calculated simply: Absorption of slice = $\exp(-\mu * d_{eff})$], where $\mu$ is the specific absorption coefficient depending on the detector material and the x-ray wavelength and $d_{eff}$ is the effective path length of the x-ray beam through the slice of thickness d, which depends on the angle $\gamma_{xy}$ of incidence of the x-ray beam (measured against the surface normal SN) hitting the respective pixel: $d_{eff} = d/\cos(\gamma_{xy})$

The geometrical split of the area at half-slice-depth will give a well-suited approximation for the distribution among neighbouring pixels. The thin slicing allows for using the linear approximation for this sub step to account for this nonlinear (exponential) problem and is thus ideal for a computational approaches.

Simulations revealed 1% accuracy for a maximum slices thickness d of 5$\mu$m for the given standard conditions of 450$\mu$m (thickness), Si (sensor material) with 75$\mu$m (width) pixels and relatively moderate angular incidence (such as up to 30°); 2$\mu$m slices have shown to be more than enough to produce very accurate results while maintaining a reasonable algorithm-run-time (fractions of seconds) on non-dedicated standard PCs.

As this procedure must be performed for each pixel individually, runtime optimization is of importance for large pixel arrays. For example, the EIGER2R500K detector has around 500.000 pixels module. Larger EIGER detectors can have multiple modules combined up to a 16 Million pixel version. On the other hand this calculation has to be done only once for each experimental setup. If detector - sample distance or tilt angle of the detector is changed however, a new correction matrix must be calculated.

With the algorithm a smeared signal can be redistributed to its original incident pixel - the method is suitable for all 1D and 2D problems and can be adapted for other sensors and input wavelengths.

Note: For 2D detectors the underlying problem is indeed 3-dimensional as depicted in **Fig. 9;** pixels belong to x-ray sensitive spatial elements of generally cuboid shape (or "pillars"). On the left, an area of 4x3 pixels and their corresponding spatial elements (compare spatial element 2a, 2q by way of example) are shown in perspective view, and on the right, a plan view is shown. The local trajectory 3 (here of pixel 2a) intersects with the spatial elements of seven other pixels here. As an example, overlap of the trajectory 3 of spatial element 2a with spatial element 2q at about the middle of the sensor (in z direction) is illustrated with a dash-dotted frame; the determination of such footprints is solvable; the projection approach described above in Fig. 8 simplifies the required calculations.

It should be noted that for a 2D detector, two incident angles $\alpha_{xy}$ and $\beta_{xy}$ with respect to the two coordinate axes (x-axis and y-axis) may be used for defining the incidence geometry at a particular pixel. For a 1D detector, in general one incident angle $\alpha_x$ (with respect to one axis, such as the x-axis) may be used for defining the geometry at a particular pixel. However, it is also possible to use a "total" angle of incidence $\gamma_{xy}$ or $\gamma_x$ (covering inclination to both axes x, y) in these cases.

The correction matrix $C_{ij}(x,y)$ depends on some parameters and preconditions.

For an optimized result the sensor specific absorption should be known accurately, and for this purpose the input wavelength should also be known. It should be noted that the calculation is facilitated if the x-ray radiation is as monochromatic as possible. Also the sensor specific absorption in the top metal layer may be added into the calculation. Simulations have shown that the effects are however minor if wavelength is changed slightly and most experiments (in laboratory devices) are quite monochromatic through use of optical elements like Göbel mirrors, absorption-edge-filers or the like before illuminating the sample. Slightly polychromatic simulations and slightly deviating sensor absorptions however also only slightly alter the result and are thus not considered further here, even though the inventive algorithm can include it, for example by approximation of polychromatic content by multiple fractions of monochromatic content.

If the setup is know the correction matrix can be calculated up front and can thus be applied on any image later on - calculations for this matrix during runtime are thus not needed.

*Further improvements of the inventive algorithm*

Due to the non-pixelated structure of the radiation absorbing material (=absorber/sensor) in modern x-ray detectors, charge sharing between neighbouring pixels can occur. The pixel structure is established by electrodes mounted in a pixel array below the radiation absorbing material. If an x-ray photon impinges on the absorber on an area between two electrodes, charge sharing may occur, i.e. parts of an electron cloud generated by a photon absorption may be registered by two adjacent pixels (or spatial elements). This is another effect of smearing a signal into different pixels.

Modern detectors provide means to reduce the registration of such kind of events by setting a threshold. The typical threshold is 50%, i.e. an event is only registered in a pixel if its energy is above 50% of the energy of an event completely occurring in one pixel alone. Then if a single photon leads to electrons registered equally in e.g. two neighbouring pixels it is discarded (50% threshold), and if a single photon leads to electrons registered in two pixels with asymmetric energy distribution, it is only registered in the pixel where the greater energy part was registered. The model presented above based on overlap with respect to structural dimensions is appropriate for well defined detectors at 50% threshold ratio of incoming X-rays. Nevertheless charge sharing can be included in the calculation of the correction matrix (see below).

Furthermore energy discrimination is normally applied to the detector to e.g. suppress unwanted fluorescence radiation at lower energies than the diffracted x-ray beam. Here the number of electrons registered in one absorption event is added up. If it is below a specified threshold the event is discarded. If this threshold is increased the calculation of the correction matrix needs to be adapted.

By increasing the energy threshold the effective pixel area size is reduced. This is illustrated in **Fig. 10** for a hypothetical 2D detector viewed from the top. On the left, the effective dimensions resp. effective element surfaces 102 of the spatial elements (compare element 2a) perpendicular to the thickness direction (z) are shown with a dot-dashed line for a 3x3 pixel area if a threshold above 50% (such as e.g. 70%) is applied. The overlap of the reduced local trajectory 100 (based on the projection of the effective element surface 102 with reduced effective dimensions $w_x^{eff}$, $w_y^{eff}$ along the local trajectory 3, and linked to the reduced exit footprint 101), i.e. of the effective absorption volume 105, with the respective effective volumes 104 (based on effective dimensions $w_x^{eff}$, $w_y^{eff}$, $w_z$) of spatial elements is determined for calculating the correction matrix values for this situation. On the right, effective dimensions $w_x^{eff}$, $w_y^{eff}$ are indicated for different energy thresholds above 50%, such as at 55%, 70% and 85%. The higher the threshold, the smaller the effective dimensions. The effective dimensions $w_x^{eff}$, $w_y^{eff}$ are smaller than the structural dimensions $w_x$, $w_y$ for the spatial element 2a, indicated here for the highest energy threshold. Around the effective element surfaces 102 or effective volumes 104, blind regions 103 remain.

For experiments with increased (well above 50%) energy threshold, significant blind regions between the pixels will occur hence reducing the effective pixel size due to charge sharing. The effective pixel size vs. energy threshold function can be measured directly with a pencil beam scanned over the detector or based on individual shots at different thresholds be approximated indirectly through the change in registered intensity; the former will however lead to much more accurate results.

The inventive algorithm can be adapted to this change by incorporating a smaller area of the pixel in the slicing model. This can be done by characterizing the pixel size per threshold-ratio function for a given detector. As described in Fig. 10, the active area of an element is reduced to exclude boundary regions when doing the area calculations (see again Fig. 10, left)

The inventive algorithm may compensate for effective thickness variation as each pixel can be treated accurately with the counts that were actually impinging on the specific pixel (or the respective element surface). X-ray beams entering perpendicular on the detector (or its common detector plane) have a shorter path length compared to beams entering at an angle. This leads to a virtually higher absorption of pixels with higher angle of incidence which should be corrected.

An effective thickness matrix E(x,y) normalized to the pixel thickness of the sensor describes the absorption length differences based on the varying angle of incidence and can be calculated for each data point D(x,y) of the data set and can then be used in similar fashion like a flatfield calibration correction to downscale overrepresentations.

**Fig. 11** shows in the top left illustration the different path lengths inside an x-ray detector 5 for x-ray radiation 135, in case of a perpendicular x-ray beam 133 (corresponding to 100%) and in case of a slant x-ray beam 134 hitting the x-ray detector 5 at an incident angle $\gamma_{xy}$ measured against the surface normal SN of the common detector plane DP built by the element surfaces (compare for example ref. 4a) of the x-ray sensitive spatial elements (compare ref. 2a ff) of the pixels (corresponding to significantly more than 100%). It should be noted that the angle of incidence $\gamma_{xy}$ depends on the detector setup, in particular on the distance between the sample position and the detector, and on the distance of position x, y to the PONI. The local trajectory 10 of x-ray beam 134 is larger by a factor of $1/\cos(\gamma_{xy})$, as compared to the local trajectory 3 of x-ray beam 133, as far as the trajectories 3, 9 run within the thickness $w_z$ of the x-ray detector 5.

This means that the effective thickness of the detector 5 varies with the pixel position, compare the top right illustration for the position with respect to the x-axis.

The larger the (local) effective thickness at a pixel position, the larger the overall absorbed intensity will be at this pixel position after having sorted all absorbed intensity into the pixel where the x-ray beam entered the x-ray detector at the element surface of the spatial element of said pixel, compare bottom left illustration. The increase in intensity can be e.g. 25% as compared to the PONI position (which is here about x index position 240).

By "inverting" the effective thickness, an efficiency correction factor ECF can be determined for each pixel, which can be multiplied with the intensity value of this pixel. The illustration bottom left shows such an efficiency correction factor EFC as a function of the pixel position: At the detector center, where the x-ray beam hits the detector surface perpendicularly, i.e. at the PONI 40, the ECF is 1, and with larger distance from the center, the smaller the ECF becomes. The efficiency correction factor EFC is basically $\cos(\gamma_{xy})$. If angles of incidence $\alpha_{xy}$ and $\beta_{xy}$ with respect to the x-axis and the y-axis are separately calculated, the correction factor may be expressed as $[1+\tan^2(\alpha_{xy})+\tan^2(\beta_{xy})]^{-1/2}$. Then $\alpha_{xy}$ is the angle between the PONI, the sample position and the pixel position on the x-axis, and $\beta_{xy}$ is an angle between the PONI, the sample position and the pixel position on the y-axis, with the x-axis and the y-axis having their origin at the PONI and running perpendicular to the common detector plane. Note that the PONI may be located on the x-ray detector, but may alternatively be outside the x-ray detector.

*Summary of correction procedure*

A complete correction workflow (correction procedure) could thus be employed in the fashion shown in **Fig. 12,** illustrating a sequence of correction measures that can be applied in the course of the invention. The order of this is of importance, as the first four detector specific corrections (defective pixel, rate correction, thresholding, flatfield) should be completed before the sensor parallax correction can be applied to the data. Charge sharing is not depicted separately as it is included in the sensor parallax correction, in the variant shown. Note that parallax correction is the core of the inventive method, where the smeared measured intensity of an x-ray beam is sorted back to the pixel where the x-ray beam originally hit the detector. Efficiency correction could also be included in the sensor parallax correction, but it is here performed as a follow-up; however note that efficiency correction is a separate effect. Please note further that charge sharing may be included as a part of efficiency correction; if performed in the measure before (i.e. in parallax correction) it cannot be part again in this measure (i.e. in efficiency correction), though.

*On the use of scanning detectors*

For scanning detectors (compare 2D scanning patent US 9,897,559 B2) the sensor parallax compensation method described above can also greatly improve the results but needs to be performed during the measurement. A subsequent data treatment like in the still imaging cases will not be possible once the individual frames from different positions have been merged.

*Benefits of the invention*

As the main improvements of the present invention, signal redistribution enables more accurate data handling than previous methods. The split of close signals can be accurately retrieved. Charge sharing can be predicted and accounted for. The spilling of intensity between pixels can be calculated prior to the x-ray measurement. Post-processing of still data is possible. The inventive method will also improve data quality of a scanned detector measurement with large field of view, but would need to be employed during runtime in this case (2D scanning patent relevance, compare US 9,897,559 B2). The method can be used in 1D or 2D detectors

Further, pixel intensities are accurately comparable between inclined and normal illumination. Effective-Thickness-compensation can be applied without considerable extra-runtime. No re-gridding artifacts are introduced.

A possible field of application of the invention, where the invention is particularly useful, is $\mu$XRD with large sensors in snapshot or scanning mode trying to resolve close-by peaks such as phase ID of mixed powders or small singular events (like grain size analysis). However, the invention can also be applied for standard sensor thickness and Cu illumination; beneficial effects are largely visible for small pixels e.g. 75$\mu$m and smaller and higher energies e.g. for Ga, Mo, Ag radiation. Small sample to detector distances (typically 2cm to 10cm benefit greatly from the invention.

It may be noted here that the inventive parallax compensation method is preferably performed with a point-focus illumination of the sample, and the x-rays are preferably (for practical purposes) monochromatic, e.g. by applying a Göbel mirror reflection. Charge sharing is preferably excluded, in particular by applying a charge sharing threshold. The photon statistic is preferably high, what can be ensured by sufficiently long exposure times or high photon flux. Defective pixels are preferably linearly interpolated to account for missing data points. In the model for calculating the correction values (or correction matrix values), preferably thin slices with constant absorption are assumed; the slices are preferably non-skewed, and the entry footprint and the exit footprint are preferably identical (using a projection onto the middle plane of the slice). The center of mass is preferably allocated to the pixel center without using any subpixels.

In summary, the invention relates to a method for an acquisition of an x-ray pattern of a sample (131), wherein a set of intensity values is obtained with a spatially resolved x-ray detector comprising a plurality of pixels, the method comprising a plurality of correction steps, wherein each correction step is assigned to a working pixel (WP),

with a respective correction step comprising for each of a number of neighbouring pixels (p; P11-P33) of the working pixel (WP),

- calculating a correction value which depends on the intensity value of the working pixel (WP) and further depends on a detection probability in a spatial element (2a-2q) of the respective neighbouring pixel (p; P11-P33) of x-ray radiation (135) originating from a sample position (131a) and incident on an element surface (4a, 4b, 4d) of the spatial element (2a-2q) of the working pixel (WP),
- subtracting the correction value from the intensity value of the neighbouring pixel (p; P11-P33),
- and adding the correction value to the intensity value of the working pixel (WP),

wherein the correction procedure begins with a correction step for the pixel (p; P11-P33) of the x-ray detector (5) being closest to a point of normal incidence (40) of a common detector plane (DP) as working pixel (WP), and wherein the correction step is applied iteratively to further pixels (p; P11-P33) of the x-ray detector (5), wherein a pixel (p; P11-P33) may only become the next working pixel (WP) in a next correction step if all direct neighbour pixels (p; P11-P33) of this next working pixel (WP) which have a local trajectory (3, 10) intersecting the spatial element (2a-2q) of this next working pixel (WP) have already been working pixels (WP) in a previous correction step. The invention provides an x-ray pattern of a sample of improved quality, in particular which has an improved compensation of sensor-intrinsic parallax effects.

List of reference signs:

| | |
|---|---|
| 1 | x-ray beam |
| 2a-2q | x-ray sensitive spatial element |
| 3 | local trajectory |
| 4a, 4b, 4d | element surface |
| 5 | x-ray detector |
| 6 | center of mass |
| 8 | new center of mass |
| 9 | x-ray beam |
| 10 | local trajectory |
| 40 | point of normal incidence (PONI) |
| 41 | (exit) footprint |
| 80 | surface |
| 81 | structural absorption volume |
| 81a | projection of the structural absorption volume |
| 82 | structural volume |
| 82a | projection of the structural absorption volume |
| 100 | reduced local trajectory |
| 101 | reduced (exit) footprint |
| 102 | effective element surface |
| 103 | blind region |
| 104 | effective volume |
| 105 | effective absorption volume |
| 130 | x-ray source |
| 131 | sample |
| 131a | sample position |
| 132 | (incoming) x-ray beam |
| 133 | (perpendicular) x-ray radiation beam |
| 134 | (slanted) x-ray radiation beam |
| 135 | (scattered or reflected) x-ray radiation |
| d | thickness of slice |
| DP | common detector plane |
| I | intensity |
| MS | center of mass shift |

| | |
|---|---|
| p | pixel |
| P11-P33 | pixel |
| S1-S9 | slice |
| SN | surface normal |
| WP | working pixel |
| $w_x$ | structural dimension (in x) |
| $w_x^{eff}$ | effective dimension (in x) |
| $w_y$ | structural dimension (in y) |
| $w_y^{eff}$ | effective dimension (in y) |
| $w_z$ | structural dimension (in z) |
| x | coordinate/position (with respect to x-axis) |
| y | coordinate/position (with respect to y-axis) |
| z | coordinate/position (with respect to z-axis) |
| $\gamma_x$ | angle of incidence (1D) |
| $\gamma_{xy}$ | angle of incidence (2D) |

## Claims

**1.** Method for an acquisition of an x-ray pattern of a sample (131), in particular an x-ray diffraction pattern of a sample (131), with

a) irradiating the sample (131) at a sample position (131a) with an x-ray beam (132), and detecting scattered or reflected x-ray radiation (135) with a spatially resolving x-ray detector (5) comprising a plurality of pixels (p; P11-P33), thus obtaining a set of intensity values,

wherein for each pixel (p; P11-P33), the x-ray detector (5) comprises an x-ray sensitive spatial element (2a-2q), wherein element surfaces (4a, 4b, 4d) of the spatial elements (2a-2q) are arranged in a common detector plane (DP), and the spatial elements (2a-2q) of the pixels (p; P11-P33) extend normal to the common detector plane (DP); and
wherein a local trajectory (3, 10) for each pixel (p, P11-P33) is defined as the trajectory of x-ray radiation (135) originating from the sample position (131a) and incident on the element surface (4a, 4b, 4d) of the respective pixel (p, P11-P33);
or providing a set of intensity values previously obtained for the sample (131) as described above;

b) applying a correction procedure on the set of intensity values, thus obtaining a set of corrected intensity values, **characterized in**

**that** the correction procedure comprises a plurality of correction steps, wherein each correction step is assigned to a working pixel (WP),
with a respective correction step comprising for each of a number of neighbouring pixels (p; P11-P33) of the working pixel (WP),

- calculating a correction value which depends on the intensity value of the working pixel (WP) and further depends on a detection probability in the spatial element (2a-2q) of the respective neighbouring pixel (p; P11-P33) of x-ray radiation (135) originating from the sample position (131a) and incident on the element surface (4a, 4b, 4d) of the spatial element (2a-2q) of the working pixel (WP),
- subtracting the correction value from the intensity value of the neighbouring pixel (p; P11-P33),
- and adding the correction value to the intensity value of the working pixel (WP),

**that** the correction procedure begins with a correction step for the pixel (p; P11-P33) of the x-ray detector (5) being closest to a point of normal incidence (40) of the common detector plane (DP) as working pixel (WP), and **that** the correction step is applied iteratively to further pixels (p; P11-P33) of the x-ray detector (5), wherein a pixel (p; P11-P33) may only become the next working pixel (WP) in a next correction step if all direct neighbour pixels (p; P11-P33) of this next working pixel (WP) which have a local trajectory (3, 10) intersecting the spatial element (2a-2q) of this next working pixel (WP) have already been working pixels (WP) in a previous correction step.

**2.** Method according to claim 1, **characterized in**

**that** the x-ray detector (5) is a 1-dimensional detector, with its pixels (p; P11-P33) arranged along an x-axis, **that** for the given setup of the sample position (131a), the x-ray detector (5) and the main wavelength of the x-ray beam (132), the correction values are calculated using a correction matrix $C_i(x)$ for each working pixel (WP) at position x, with x: pixel index with respect to the x-axis, i: neighbouring pixel index with respect to the x-axis, and **that** within a respective correction step, the intensity values are recalculated applying matrix calculations as follows:

$$D(x) := D(x) + \sum_i [D(x+i) * C_i(x)]$$

and

$$D(x+i) := D(x+i) - [D(x+i) * C_i(x)],$$

with D(x): intensity value at position x,
wherein i is iterated through the number of neighbouring pixels (p; P11-P33) of the working pixel (WP).

**3.** Method according to claim 1, **characterized in**

**that** the x-ray detector (5) is a 2-dimensional detector, with its pixels (p; P11-P33) arranged along an x-axis and a y-axis which are perpendicular to each other,
**that** for the given setup of the sample position (131a), the x-ray detector (5) and the main wavelength of the x-ray beam (132), the correction values are calculated using a correction matrix $C_{ij}(x, y)$ for each working pixel (WP) at positions x, y, with x: pixel index with respect to the x-axis, y: pixel index with respect to the y-axis, i: neighbouring pixel index with respect to the x-axis, j: neighbouring pixel index with respect to the y-axis, and that within a respective correction step, the intensity values are recalculated applying matrix calculations as follows:

$$D(x,y) := D(x,y) + \sum_{i,j}[D(x+i, y+j) * C_{ij}(x,y)]$$

and

$$D(x+i, y+j) := D(x+i, y+j) - \left[D(x+i, y+j) * C_{ij}(x,y)\right],$$

with D(x, y): intensity value at positions x and y,
wherein i and j are iterated through the number of neighbouring pixels (p; P11-P33) of the working pixel.

**4.** Method according to claim 3, **characterized in**

**that** the point of normal incidence (40) defines the origin of the x-axis and the y-axis,
**that** the pixels (p; P11-P33) of the x-ray detector (5) comprise four quadrants of pixels (p; P11-P33) separated by the x-axis and the y-axis, and that correction values are only calculated for a selected quadrant, in particular for the largest quadrant, and correction values for the other quadrants are mirrored from the selected quadrant.

**5.** Method according to one of the claims 2 through 4, **characterized in that** each correction matrix $C_i(x)$ is an nx1 matrix or each correction matrix $C_{ij}(x, y)$ is an nxn matrix, with n being an odd integer,

in particular wherein n=3 for including a correction only of next neighbour pixels (p; P11-P33) of the working pixel (WP),
or in particular wherein n=5 for including a correction only of next neighbour pixels (p; P11-P33) and next but one neighbour pixels (p; P11-P33) of the working pixel (WP).

**6.** Method according to one of the claims 2 through 5, **characterized in that** the correction procedure skips calculation steps where a value of a correction matrix $C_i(x)$ or $C_{ij}(x, y)$ is below a threshold $C_{thr}$.

7. Method according to claim 6, **characterized in that** $C_{thr}$ is chosen with

$$C_{thr} \leq 5\%,$$

preferably $\leq C_{thr} \leq 1\%$,
more preferably $C_{thr} \leq 0{,}2\%$,
most preferably $C_{thr} \leq 0{,}1\%$.

8. Method according to one of the claims 2 through 7, **characterized in that** the correction procedure comprises an additional correction step for the intensity values D(x) or D(x,y) with

$$D(x) := \frac{D(x)}{\sqrt{1 + tan^2(\gamma_x)}}$$

or

$$D(x,y) := \frac{D(x,y)}{\sqrt{1 + tan^2(\gamma_{xy})}}$$

with $\gamma_x$: angle between the local trajectory (3, 10) and the normal of the common detector plane (DP) for the pixel (p; P11-P33) at position x with respect to the x axis, or with $\gamma_{xy}$: angle between the local trajectory (3, 10) and the normal of the common detector plane (DP) for the pixel (p; P11-P33) at position x, y with respect to the x-axis and y-axis,
in particular wherein the additional correction step is done after the plurality of correction steps.

9. Method according to one of the claims 1 through 8, **characterized in that** each spatial element (2a-2q) of the x-ray detector (5) has structural dimensions $w_x$, $w_y$, $w_z$ with respect to a Cartesian system comprising x-axis, y-axis in the common detector plane (DP) and z-axis perpendicular to the common detector plane (DP), and that the correction values are derived taking into account a spatial overlap between

- a structural volume (82) of the spatial element (2a-2q) of the respective neighbouring pixel (p; P11-P33) with dimensions $w_x$ x $w_y$ x $w_z$, and
- a structural absorption volume (81) defined by the projection of the element surface (4a, 4b, 4d) with dimension $w_x$ x $w_y$ of the spatial element (2a-2q) of the respective working pixel (WP) along its local trajectory (3, 10).

10. Method according to one of the claims 1 through 8, **characterized in that** each spatial element (2a-2q) of the x-ray detector (5) has structural dimensions $w_x$, $w_y$, $w_z$ with respect to a Cartesian system comprising x-axis, y-axis in the common detector plane (DP) and z-axis perpendicular to the common detector plane (DP), and that the correction values are derived taking into account a spatial overlap between

- an effective volume (104) of the spatial element (2a-2q) of the respective neighbouring pixel (p; P11-P33) with dimensions $w_x^{eff}$ x $w_y^{eff}$ x $w_z$, and
- an effective absorption volume (105) defined by the projection of an effective element surface (102) with dimension $w_x^{eff}$ x $w_y^{eff}$ of the spatial element (2a-2q) of the respective working pixel (WP) along its local trajectory (3, 10),

wherein the effective element dimensions $w_x^{eff}$, $w_y^{eff}$ are reduced as compared to the structural element dimensions $w_x$, $w_y$,
in particular wherein the effective element dimensions $w_x^{eff}$, $w_y^{eff}$ are chosen such that their reduction as compared to the structural element dimensions $w_x$, $w_y$ reflects a blind region (103) between adjacent x-ray sensitive spatial elements (2a-2q) due to application of a charge sharing threshold above 50% in the x-ray detector (5).

**11.** Method according to one of the preceding claims, **characterized in that** the correction values are derived taking into account a decreasing, in particular exponentially decreasing, intensity of the x-ray radiation (135) due to absorption within the spatial elements (2a-2q) along the local trajectory (3, 10) of the working pixel (WP).

**12.** Method according to claim 9 or 10 and further according to claim 11, **characterized in**

**that** the x-ray detector (5) is divided into a series of N slices (S1-S9) having a thickness $d=w_Z/N$, with $w_Z$: dimension of the spatial element (2a-2q) with respect to a z-axis perpendicular to the common detector plane (DP) and N: number of slices (S1-S9),
and **that** the spatial overlap between the structural or effective volume (82; 104) of the spatial element (2a-2q) and the structural or effective absorption volume (81; 105) is calculated in each slice (S1-S9) separately, and absorption of x-ray radiation (135) is calculated for each slice (S1-S9) separately taking into account the absorption of x-ray radiation (135) in previous slices (S1-S9) already traversed by the x-ray radiation (135).

**13.** Method according to claim 12, **characterized in that** the thickness d of the slices (S1-S9) is chosen such that the relative absorption of each slice (S1-S9) is less than 5%, preferably less than 1%, more preferably less than 0,2%, most preferably less than 0,02%, as compared to the total intensity of the x-ray radiation (135) incident on the working pixel (135).

**14.** Method according to claim 12 or 13, **characterized in that** the spatial overlap is calculated by projecting the structural or effective volumes (82; 104) of the spatial elements (2a-2q) and the structural or effective absorption volumes (81; 105) in each slice (S1-S9) into a respective surface (80) in the middle of each slice (S1-S9) in z-direction, and calculating the overlap of the projections (81a, 82a).

**15.** Method according to claim 2 or 3, **characterized in that** for the given setup of sample position (131a), x-ray detector (5) and the main wavelength of the x-ray beam (132), the correction matrices $C_i(x)$ or $C_{ij}(x, y)$ are calculated once and are applied to a plurality of sets of intensity values D(x) or D(x,y) measured with the same sample (131) and/or different samples (131) within the given setup.

## Patentansprüche

**1.** Verfahren zur Erfassung eines Röntgenmusters einer Probe (131), insbesondere eines Röntgenbeugungsmusters einer Probe (131), mit

a) Bestrahlung der Probe (131) an einer Probenposition (131a) mit einem Röntgenstrahl (132), und Detektieren von gestreuter oder reflektierter Röntgenstrahlung (135) mit einem räumlich auflösenden Röntgendetektor (5), der eine Vielzahl von Pixeln (p; P11-P33) umfasst, wodurch ein Satz von Intensitätswerten erhalten wird,

wobei der Röntgendetektor (5) für jedes Pixel (p; P11-P33) ein röntgensensitives räumliches Element (2a-2q) umfasst, wobei Elementoberflächen (4a, 4b, 4d) der räumlichen Elemente (2a-2q) in einer gemeinsamen Detektorebene (DP) angeordnet sind, und die räumlichen Elemente (2a-2q) der Pixel (p; P11-P33) sich senkrecht zu der gemeinsamen Detektorebene (DP) erstrecken; und
wobei eine lokale Trajektorie (3, 10) für jedes Pixel (p, P11-P33) als die Trajektorie der Röntgenstrahlung (135) definiert ist, die von der Probenposition (131a) stammt und auf die Elementoberfläche (4a, 4b, 4d) des jeweiligen Pixels (p, P11-P33) auftrifft;
oder Bereitstellung eines Satzes von Intensitätswerten, die zuvor für die Probe (131) wie oben beschrieben erhalten wurden;

b) Anwenden eines Korrekturverfahrens auf den Satz von Intensitätswerten, wodurch ein Satz von korrigierten Intensitätswerten erhalten wird,
**dadurch gekennzeichnet**

**dass** das Korrekturverfahren eine Vielzahl von Korrekturschritten umfasst, wobei jeder Korrekturschritt einem Arbeitspixel (WP) zugeordnet ist,
wobei ein jeweiliger Korrekturschritt für jedes einer Anzahl von benachbarten Pixeln (p; P11-P33) des Arbeitspixels (WP) umfasst:

- Berechnen eines Korrekturwertes, der von dem Intensitätswert des Arbeitspixels (WP) abhängt und ferner von einer Detektionswahrscheinlichkeit in dem räumlichen Element (2a-2q) des jeweiligen benachbarten Pixels (p; P11-P33) von Röntgenstrahlung (135) abhängt, die von der Probenposition (131a) ausgeht und auf die Elementoberfläche (4a, 4b, 4d) des räumlichen Elements (2a-2q) des Arbeitspixels (WP) auftrifft,
- Subtraktion des Korrekturwertes vom Intensitätswert des benachbarten Pixels (p; P11-P33),
- und Addieren des Korrekturwerts zum Intensitätswert des Arbeitspixels (WP),

**dass** das Korrekturverfahren mit einem Korrekturschritt für das Pixel (p; P11-P33) des Röntgendetektors (5), das einem Punkt des senkrechten Auftreffens (40) der gemeinsamen Detektorebene (DP) am nächsten liegt, als Arbeitspixel (WP) beginnt,
und **dass** der Korrekturschritt iterativ auf weitere Pixel (p; P11-P33) des Röntgendetektors (5) angewendet wird, wobei ein Pixel (p; P11-P33) nur dann das nächste Arbeitspixel (WP) in einem nächsten Korrekturschritt werden darf, wenn alle direkt benachbarten Pixel (p; P11-P33) dieses nächsten Arbeitspixels (WP), die eine das räumliche Element (2a-2q) dieses nächsten Arbeitspixels (WP) schneidende lokale Trajektorie (3, 10) aufweisen, bereits in einem vorangegangenen Korrekturschritt Arbeitspixel (WP) waren.

**2.** Verfahren nach Anspruch 1, **dadurch gekennzeichnet,**

**dass** der Röntgendetektor (5) ein eindimensionaler Detektor ist, dessen Pixel (p; P11-P33) entlang einer x-Achse angeordnet sind,
**dass** für den gegebenen Aufbau der Probenposition (131a), des Röntgendetektors (5) und der Hauptwellenlänge des Röntgenstrahls (132) die Korrekturwerte mit Hilfe einer Korrekturmatrix $C_i(x)$ für jedes Arbeitspixel (WP) an der Position x berechnet werden, mit x: Pixelindex in Bezug auf die x-Achse, i: Index der benachbarten Pixel in Bezug auf die x-Achse,
und **dass** innerhalb eines jeweiligen Korrekturschrittes die **Intensitätswerte** durch

$$D(x) := D(x) + \sum_i [D(x+i) * C_i(x)]$$

und

$$D(x+i) := D(x+i) - [D(x+i) * C_i(x)],$$

mit D(x): Intensitätswert an der Position x,
wobei i über die Anzahl der benachbarten Pixel (p; P11 - P33) des Arbeitspixels (WP) iteriert wird.

**3.** Verfahren nach Anspruch 1, **dadurch gekennzeichnet,**

**dass** der Röntgendetektor (5) ein 2-dimensionaler Detektor ist, dessen Pixel (p; P11-P33) entlang einer x-Achse und einer y-Achse angeordnet sind, die senkrecht zueinander stehen,
**dass** für den gegebenen Aufbau der Probenposition (131a), des Röntgendetektors (5) und der Hauptwellenlänge des Röntgenstrahls (132) die Korrekturwerte mittels einer Korrekturmatrix $C_{ij}(x, y)$ für jedes Arbeitspixel (WP) an den Positionen x, y berechnet werden, wobei x: Pixelindex in Bezug auf die x-Achse, y: Pixelindex in Bezug auf die y-Achse, i: Index der benachbarten Pixel in Bezug auf die x-Achse, j: Index der benachbarten Pixel in Bezug auf die y-Achse,
und **dass** innerhalb eines jeweiligen Korrekturschrittes die Intensitätswerte durch Anwenden von Matrixberechnungen wie folgt neu berechnet werden:

$$D(x,y) := D(x,y) + \sum_{i,j}[D(x+i, y+j) * C_{ij}(x,y)]$$

und

$$D(x+i,y+j) := D(x+i,y+j) - [D(x+i,y+j) * C_{ij}(x,y)],$$

mit D(x, y): Intensitätswert an den Positionen x und y,
wobei i und j über die Anzahl der benachbarten Pixel (p; P11-P33) des Arbeitspixels iteriert werden.

**4.** Verfahren nach Anspruch 3, **dadurch gekennzeichnet,**

**dass** der Punkt des senkrechten Auftreffens (40) den Ursprung der x-Achse und der y-Achse definiert,
**dass** die Pixel (p; P11-P33) des Röntgendetektors (5) vier durch die x-Achse und die y-Achse getrennte Quadranten von Pixeln (p; P11-P33) umfassen,
und **dass** Korrekturwerte nur für einen ausgewählten Quadranten, insbesondere für den größten Quadranten, berechnet werden und Korrekturwerte für die anderen Quadranten an dem ausgewählten Quadranten gespiegelt werden.

**5.** Verfahren nach einem der Ansprüche 2 bis 4, **dadurch gekennzeichnet,**

**dass** jede Korrekturmatrix $C_i(x)$ eine nx1-Matrix ist oder jede Korrekturmatrix $C_{ij}(x, y)$ eine nxn-Matrix ist, wobei n eine ungerade ganze Zahl ist,
insbesondere wobei n=3, um eine Korrektur nur der nächsten benachbarten Pixel (p; P11-P33) des Arbeitspixels (WP) miteinzubeziehen,
oder insbesondere wobei n=5, um eine Korrektur nur der nächsten benachbarten Pixel (p; P11-P33) und der übernächsten benachbarten Pixel (p; P11-P33) des Arbeitspixels (WP) miteinzubeziehen.

**6.** Verfahren nach einem der Ansprüche 2 bis 5, **dadurch gekennzeichnet, dass** das Korrekturverfahren Berechnungsschritte überspringt, wenn ein Wert einer Korrekturmatrix $C_i(x)$ oder $C_{ij}(x, y)$ unter einem Schwellenwert $C_{thr}$ liegt.

**7.** Verfahren nach Anspruch 6, **dadurch gekennzeichnet, dass** $C_{thr}$ gewählt wird mit

$$C_{thr} \leq 5\%,$$

vorzugsweise ≤ $C_{thr} \leq 1\%$,
weiter bevorzugt $C_{thr} \leq 0{,}2\%$,
am meisten bevorzugt $C_{thr} \leq 0{,}1\%$.

**8.** Verfahren nach einem der Ansprüche 2 bis 7, **dadurch gekennzeichnet, dass** das Korrekturverfahren einen zusätzlichen Korrekturschritt für die Intensitätswerte D(x) oder D(x,y) umfasst mit

$$D(x) := \frac{D(x)}{\sqrt{1 + tan^2(\gamma_x)}}$$

oder

$$D(x,y) := \frac{D(x,y)}{\sqrt{1 + tan^2(\gamma_{xy})}}$$

mit $\gamma_x$: Winkel zwischen der lokalen Trajektorie (3, 10) und der Normalen der gemeinsamen Detektorebene (DP) für das Pixel (p; P11-P33) an der Position x in Bezug auf die x-Achse, oder mit $\gamma_{xy}$: Winkel zwischen der lokalen Trajektorie (3, 10) und der Normalen der gemeinsamen Detektorebene (DP) für das Pixel (p; P11-P33) an der Position x, y in Bezug auf die x-Achse und die y-Achse, insbesondere wobei der zusätzliche Korrekturschritt nach der Mehrzahl von Korrekturschritten erfolgt.

**9.** Verfahren nach einem der Ansprüche 1 bis 8, **dadurch gekennzeichnet, dass** jedes räumliche Element (2a-2q) des Röntgendetektors (5) Strukturabmessungen $w_x$, $w_y$, $w_z$ in Bezug auf ein kartesisches System mit x-Achse, y-Achse in der gemeinsamen Detektorebene (DP) und z-Achse senkrecht zur gemeinsamen Detektorebene (DP) aufweist, und dass die Korrekturwerte abgeleitet werden unter Berücksichtigung einer räumlichen Überlappung zwischen

- einem Strukturvolumen (82) des räumlichen Elements (2a-2q) des jeweiligen benachbarten Pixels (p; P11-P33) mit den Abmessungen $w_x$ x $w_y$ x $w_z$, und
- einem strukturellen Absorptionsvolumen (81), das durch die Projektion der Elementoberfläche (4a, 4b, 4d) mit den Abmessungen $w_x$ x $w_y$ des räumlichen Elements (2a-2q) des jeweiligen Arbeitspixels (WP) entlang seiner lokalen Trajektorie (3, 10) definiert ist.

**10.** Verfahren nach einem der Ansprüche 1 bis 8, **dadurch gekennzeichnet, dass** jedes räumliche Element (2a-2q) des Röntgendetektors (5) Strukturabmessungen $w_x$, $w_y$, $w_z$ in Bezug auf ein kartesisches System mit x-Achse, y-Achse in der gemeinsamen Detektorebene (DP) und z-Achse senkrecht zur gemeinsamen Detektorebene (DP) aufweist, und dass die Korrekturwerte abgeleitet werden unter Berücksichtigung einer räumlichen Überlappung zwischen

- einem effektiven Volumen (104) des räumlichen Elements (2a-2q) des jeweiligen benachbarten Pixels (p; P11-P33) mit den Abmessungen $w_x^{eff}$ x $w_y^{eff}$ x $w_z$, und
- einem effektiven Absorptionsvolumen (105), das durch die Projektion einer effektiven Elementoberfläche (102) mit der Abmessung $w_x^{eff} \times w_y^{eff}$ des räumlichen Elements (2a-2q) des jeweiligen Arbeitspixels (WP) entlang seiner lokalen Trajektorie (3, 10) definiert ist,

wobei die effektiven Elementabmessungen $w_x^{eff}$, $w_y^{eff}$ im Vergleich zu den Strukturelementabmessungen $w_x$, $w_y$ reduziert sind,
insbesondere wobei die effektiven Elementabmessungen $w_x^{eff}$, $w_y^{eff}$ so gewählt sind, dass ihre Reduktion im Vergleich zu den Strukturelementabmessungen $w_x$, $w_y$ einen Blindbereich (103) zwischen benachbarten röntgensensitiven räumlichen Elementen (2a-2q) aufgrund der Anwendung einer Ladungsverteilungsschwelle von über 50% im Röntgendetektor (5) reflektiert.

**11.** Verfahren nach einem der vorhergehenden Ansprüche, **dadurch gekennzeichnet, dass** die Korrekturwerte unter Berücksichtigung einer abnehmenden, insbesondere exponentiell abnehmenden, Intensität der Röntgenstrahlung (135) aufgrund von Absorption innerhalb der räumlichen Elemente (2a-2q) entlang der lokalen Trajektorie (3, 10) des Arbeitspixels (WP) abgeleitet werden.

**12.** Verfahren nach Anspruch 9 oder 10 und weiter nach Anspruch 11, **dadurch gekennzeichnet,**

**dass** der Röntgendetektor (5) in eine Reihe von N Schichten (S1-S9) mit einer Dicke $d=w_z/N$ unterteilt wird, mit $w_z$: Abmessung des räumlichen Elements (2a-2q) in Bezug auf eine z-Achse senkrecht zur gemeinsamen Detektorebene (DP) und N: Anzahl der Schichten (S1-S9),
und **dass** die räumliche Überlappung zwischen dem strukturellen oder effektiven Volumen (82; 104) des räumlichen Elements (2a-2q) und dem strukturellen oder effektiven Absorptions-Volumen (81; 105) in jeder Schicht (S1-S9) separat berechnet wird, und die Absorption von Röntgenstrahlung (135) für jede Schicht (S1-S9) separat unter Berücksichtigung der Absorption von Röntgenstrahlung (135) in den vorhergehenden Schichten (S1-S9), die bereits von der Röntgenstrahlung (135) durchquert wurden, berechnet wird.

**13.** Verfahren nach Anspruch 12, **dadurch gekennzeichnet, dass** die Dicke d der Schichten (S1-S9) so gewählt wird, dass die relative Absorption jeder Schicht (S1-S9) weniger als 5 %, vorzugsweise weniger als 1 %, noch bevorzugter weniger als 0,2 %, am meisten bevorzugt weniger als 0,02 %, im Vergleich zur Gesamtintensität der Röntgenstrahlung (135), die auf das Arbeitspixel (WP) auftrifft, beträgt.

**14.** Verfahren nach Anspruch 12 oder 13, **dadurch gekennzeichnet, dass** die räumliche Überlappung berechnet wird durch Projektion der strukturellen oder effektiven Volumina (82; 104) der räumlichen Elemente (2a-2q) und der strukturellen oder effektiven Absorptionsvolumina (81; 105) in jeder Schicht (S1-S9) in eine entsprechende Fläche (80) in der Mitte jeder Schicht (S1-S9) in z-Richtung, und Berechnung der Überlappung der Projektionen (81a, 82a).

**15.** Verfahren nach Anspruch 2 oder 3, **dadurch gekennzeichnet, dass** für den gegebenen Aufbau der Probenposition (131a), des Röntgendetektors (5) und der Hauptwellenlänge des Röntgenstrahls (132) die Korrekturmatrizen $C_i(x)$ oder $C_{ij}(x, y)$ einmal berechnet und auf eine Vielzahl von Sätzen von Intensitätswerten D(x) oder D(x, y) angewendet werden, die mit derselben Probe (131) und/oder verschiedenen Proben (131) innerhalb des gegebenen Aufbaus gemessen wurden.

## Revendications

**1.** Procédé pour l'acquisition d'un diagramme de rayons X d'un échantillon (131), en particulier d'un diagramme de diffraction de rayons X d'un échantillon (131), avec

a) l'irradiation de l'échantillon (131) à une position d'échantillon (131a) avec un faisceau de rayons X (132), et détection du rayonnement de rayons X (135) diffusé ou réfléchi avec un détecteur de rayons X à résolution spatiale (5) comprenant une pluralité de pixels (p ; P11-P33), obtenant ainsi un ensemble de valeurs d'intensité,

pour chaque pixel (p ; P11-P33), le détecteur de rayons X (5) comprenant un élément spatial sensible aux rayons X (2a-2q), les surfaces d'éléments (4a, 4b, 4d) des éléments spatiaux (2a-2q) étant agencées dans un plan de détecteur commun (DP), et les éléments spatiaux (2a-2q) des pixels (p ; P11-P33) s'étendant normalement au plan de détecteur commun (DP) ; et
une trajectoire locale (3, 10) pour chaque pixel (p, P11-P33) étant définie comme la trajectoire de rayonnement de rayons X (135) provenant de la position de l'échantillon (131a) et incident sur la surface de l'élément (4a, 4b, 4d) du pixel respectif (p, P11-P33) ;
ou la fourniture d'un ensemble de valeurs d'intensité obtenues précédemment pour l'échantillon (131) comme décrit ci-dessus ;

b) l'application d'une procédure de correction sur l'ensemble de valeurs d'intensité, obtenant ainsi un ensemble de valeurs d'intensité corrigées,
**caractérisé en ce que**

la procédure de correction comprend une pluralité d'étapes de correction, chaque étape de correction étant attribuée à un pixel de travail (WP), avec une étape de correction respective comprenant pour chacun d'un certain nombre de pixels voisins (p ; P11-P33) du pixel de travail (WP),

- le calcul d'une valeur de correction qui dépend de la valeur d'intensité du pixel de travail (WP) et qui dépend en outre d'une probabilité de détection dans l'élément spatial (2a-2q) du pixel voisin respectif (p ; P11-P33) de rayonnement de rayons X (135) provenant de la position de l'échantillon (131a) et incident sur la surface de l'élément (4a, 4b, 4d) de l'élément spatial (2a-2q) du pixel de travail (WP),
- la soustraction de la valeur de correction de la valeur d'intensité du pixel voisin (p ; P11-P33),
- et l'ajout de la valeur de correction à la valeur d'intensité du pixel de travail (WP),

**en ce que** la procédure de correction commence par une étape de correction pour le pixel (p ; P11-P33) du détecteur de rayons X (5) qui est le plus proche d'un point d'incidence normale (40) du plan de détecteur commun (DP) en tant que pixel de travail (WP),
et **en ce que** l'étape de correction est appliquée de manière itérative à d'autres pixels (p ; P11-P33) du détecteur de rayons X (5), un pixel (p ; P11-P33) ne pouvant devenir le pixel de travail suivant (WP) dans une étape de correction suivante que si tous les pixels voisins directs (p ; P11-P33) de ce pixel de travail suivant (WP) qui ont une trajectoire locale (3, 10) coupant l'élément spatial (2a-2q) de ce pixel de travail suivant (WP) ont déjà été des pixels de travail (WP) dans une étape de correction précédente.

**2.** Procédé selon la revendication 1, **caractérisé en ce que**

le détecteur de rayons X (5) est un détecteur unidimensionnel, avec ses pixels (p ; P11-P33) disposés le long d'un axe x,
**en ce que** pour la configuration donnée de la position de l'échantillon (131a), du détecteur de rayons X (5) et de la longueur d'onde principale du faisceau de rayons X (132), les valeurs de correction sont calculées en utilisant une matrice de correction $C_i(X)$ pour chaque pixel de travail (WP) à la position x, avec x : indice de pixel par rapport à l'axe x, i : indice de pixel voisin par rapport à l'axe x,
et **en ce que** dans une étape de correction respective, les valeurs d'intensité sont recalculées en appliquant des calculs matriciels comme suit :

$$D(x) := D(x) + \sum_i [D(x+i) * C_i(x)]$$

et

$$D(x+i) := D(x+i) - [D(x+i) * C_i(x)],$$

avec D(x) : valeur d'intensité à la position x,
i étant itéré sur le nombre de pixels voisins (p ; P11-P33) du pixel de travail (WP).

3. Procédé selon la revendication 1, **caractérisé en ce que**

le détecteur de rayons X (5) est un détecteur bidimensionnel, avec ses pixels (p ; P11-P33) agencés le long d'un axe x et d'un axe y qui sont perpendiculaires l'un à l'autre,
pour la configuration donnée de la position de l'échantillon (131a), du détecteur de rayons X (5) et de la longueur d'onde principale du faisceau de rayons X (132), les valeurs de correction sont calculées à l'aide d'une matrice de correction $C_{ij}(x, y)$ pour chaque pixel de travail (WP) aux positions x, y, avec x : indice de pixel par rapport à l'axe x, y : indice de pixel par rapport à l'axe y, i : indice de pixel voisin par rapport à l'axe x, j : indice de pixel voisin par rapport à l'axe y, et dans une étape de correction respective, les valeurs d'intensité sont recalculées en appliquant des calculs de matrice comme suit :

$$D(x,y) := D(x,y) + \sum_{i,j} \left[D(x+i, y+j) * C_{ij}(x,y)\right]$$

et

$$D(x+i, y+j) := D(x+i, y+j) - \left[D(x+i, y+j) * C_{ij}(x,y)\right],$$

avec D(x, y) : valeur d'intensité aux positions x et y,
i et j étant itérés sur le nombre de pixels voisins (p ; P11-P33) du pixel de travail.

4. Procédé selon la revendication 3, **caractérisé en ce que**

le point d'incidence normale (40) définit l'origine de l'axe x et de l'axe y,
**en ce que** les pixels (p ; P11-P33) du détecteur de rayons X (5) comprennent quatre quadrants de pixels (p ; P11-P33) séparés par l'axe x et l'axe y,
et **en ce que** les valeurs de correction ne sont calculées que pour un quadrant sélectionné, en particulier pour le plus grand quadrant, et les valeurs de correction pour les autres quadrants sont reproduite en miroir à partir du quadrant sélectionné.

5. Procédé selon l'une des revendications 2 à 4, **caractérisé en ce que** chaque matrice de correction $C_i(x)$ est une matrice n×1 ou chaque matrice de correction $C_{ij}(x, y)$ est une matrice n×n, n étant un nombre entier impair,

en particulier n=3 pour inclure une correction uniquement des pixels voisins suivants (p ; P11-P33) du pixel de travail (WP),
ou en particulier n=5 pour inclure une correction uniquement des pixels voisins suivants (p ; P11-P33) et des pixels voisins sauf un (p ; P11-P33) du pixel de travail (WP).

6. Procédé selon l'une des revendications 2 à 5, **caractérisé en ce que** la procédure de correction saute des étapes de calcul lorsqu'une valeur d'une matrice de correction $C_i(x)$ ou $C_{ij}(x, y)$ est inférieure à un seuil $C_{thr}$.

7. Procédé selon la revendication 6, **caractérisé en ce que** $C_{thr}$ est choisi avec $C_{thr} \leq 5$ %,

de préférence $\leq C_{thr} \leq 1$ %,

plus préférentiellement $C_{thr} \leq 0,2$ %,
plus préférentiellement $C_{thr} \leq 0,1$ %.

**8.** Procédé selon l'une des revendications 2 à 7, **caractérisé en ce que** la procédure de correction comprend une étape de correction supplémentaire pour les valeurs d'intensité D(x) ou D(x,y) avec

$$D(x) := \frac{D(x)}{\sqrt{1+tan^2(\gamma_x)}}$$

ou

$$D(x,y) := \frac{D(x,y)}{\sqrt{1+tan^2(\gamma_{xy})}}$$

avec $\gamma_x$ : angle entre la trajectoire locale (3, 10) et la normale du plan de détection commun (DP) pour le pixel (p ; P11-P33) à la position x par rapport à l'axe x, ou avec $\gamma_{xy}$ : angle entre la trajectoire locale (3, 10) et la normale du plan de détection commun (DP) pour le pixel (p ; P11-P33) à la position x, y par rapport à l'axe x et à l'axe y, en particulier l'étape de correction supplémentaire étant effectuée après la pluralité d'étapes de correction.

**9.** Procédé selon l'une des revendications 1 à 8, **caractérisé en ce que** chaque élément spatial (2a-2q) du détecteur de rayons X (5) a des dimensions structurelles $W_x$, $W_y$, $W_z$ par rapport à un système cartésien comprenant un axe x, un axe y dans le plan commun du détecteur (DP) et un axe z perpendiculaire au plan commun du détecteur (DP), et **en ce que** les valeurs de correction sont dérivées en tenant compte d'un recouvrement spatial entre

- un volume structurel (82) de l'élément spatial (2a-2q) du pixel voisin respectif (p ; P11-P33) avec des dimensions $W_x \times W_y \times W_z$, et
- un volume structurel d'absorption (81) défini par la projection de la surface de l'élément (4a, 4b, 4d) de dimensions $W_x \times W_y$ de l'élément spatial (2a-2q) du pixel de travail respectif (WP) le long de sa trajectoire locale (3, 10).

**10.** Procédé selon l'une des revendications 1 à 8, **caractérisé en ce que** chaque élément spatial (2a-2q) du détecteur de rayons X (5) a des dimensions structurelles $W_x$, $W_y$, $W_z$ par rapport à un système cartésien comprenant un axe x, un axe y dans le plan commun du détecteur (DP) et un axe z perpendiculaire au plan commun du détecteur (DP), et **en ce que** les valeurs de correction sont dérivées en tenant compte d'un recouvrement spatial entre

- un volume effectif (104) de l'élément spatial (2a-2q) du pixel voisin respectif (p ; P11-P33) avec des dimensions $W_x^{eff} \times W_y^{eff} \times W_z$, et
- un volume d'absorption effectif (105) défini par la projection d'une surface d'élément effectif (102) de dimension $W_x^{eff} \times W_y^{eff}$ de l'élément spatial (2a-2q) du pixel de travail respectif (WP) le long de sa trajectoire locale (3, 10), les dimensions d'élément effectif $W_x^{eff}$, $w_y^{eff}$ étant réduites par rapport aux dimensions d'élément structurel $W_x$, $W_y$, en particulier les dimensions d'élément effectif $W_x^{eff}$, $w_y^{eff}$ étant choisies de telle sorte que leur réduction par rapport aux dimensions d'élément structurel $W_x$, $W_y$ reflète une région aveugle (103) entre des éléments spatiaux adjacents sensibles aux rayons X (2a-2q) en raison de l'application d'un seuil de partage de charge supérieur à 50 % dans le détecteur de rayons X (5).

**11.** Procédé selon l'une des revendications précédentes, **caractérisé en ce que** les valeurs de correction sont déduites en tenant compte d'une intensité décroissante, notamment exponentiellement décroissante, du rayonnement de rayons X (135) du fait de l'absorption au sein des éléments spatiaux (2a-2q) le long de la trajectoire locale (3, 10) du pixel de travail (WP).

**12.** Procédé selon la revendication 9 ou 10 et en outre selon la revendication 11, **caractérisé en ce que**

le détecteur de rayons X (5) est divisé en une série de N tranches (S1-S9) ayant une épaisseur $d=W_z/N$, avec $W_z$ : dimension de l'élément spatial (2a-2q) par rapport à un axe z perpendiculaire au plan commun du détecteur (DP) et N : nombre de tranches (S1-S9),
et **en ce que** le recouvrement spatial entre le volume structurel ou effectif (82 ; 104) de l'élément spatial (2a-2q) et le volume structurel ou effectif d'absorption (81 ; 105) est calculé dans chaque tranche (S1-S9) séparément, et l'absorption de rayonnement de rayons X (135) est calculée pour chaque tranche (S1-S9) séparément en tenant compte de l'absorption de rayonnement de rayons X (135) dans les tranches précédentes (S1-S9) déjà traversées par le rayonnement de rayons X (135).

**13.** Procédé selon la revendication 12, **caractérisé en ce que** l'épaisseur d des tranches (S1-S9) est choisie de telle sorte que l'absorption relative de chaque tranche (S1-S9) est inférieure à 5 %, de préférence inférieure à 1 %, plus préférablement inférieure à 0,2 %, le plus préférablement inférieure à 0,02 %, par rapport à l'intensité totale du rayonnement de rayons X (135) incident sur le pixel de travail (WP).

**14.** Procédé selon la revendication 12 ou 13, **caractérisé en ce que** le recouvrement spatial est calculé en projetant les volumes structurels ou effectifs (82 ; 104) des éléments spatiaux (2a-2q) et les volumes d'absorption structurels ou effectifs (81 ; 105) dans chaque tranche (S1-S9) dans une surface respective (80) au milieu de chaque tranche (S1-S9) dans la direction z, et en calculant le recouvrement des projections (81a, 82a).

**15.** Procédé selon la revendication 2 ou 3, **caractérisé en ce que** pour la configuration donnée de la position de l'échantillon (131a), du détecteur de rayons X (5) et de la longueur d'onde principale du faisceau de rayons X (132), les matrices de correction $C_i(x)$ ou $C_{ij}(x, y)$ sont calculées une fois et sont appliquées à une pluralité d'ensembles de valeurs d'intensité D(x) ou D(x, y) mesurées avec le même échantillon (131) et/ou des échantillons différents (131) dans la configuration donnée.

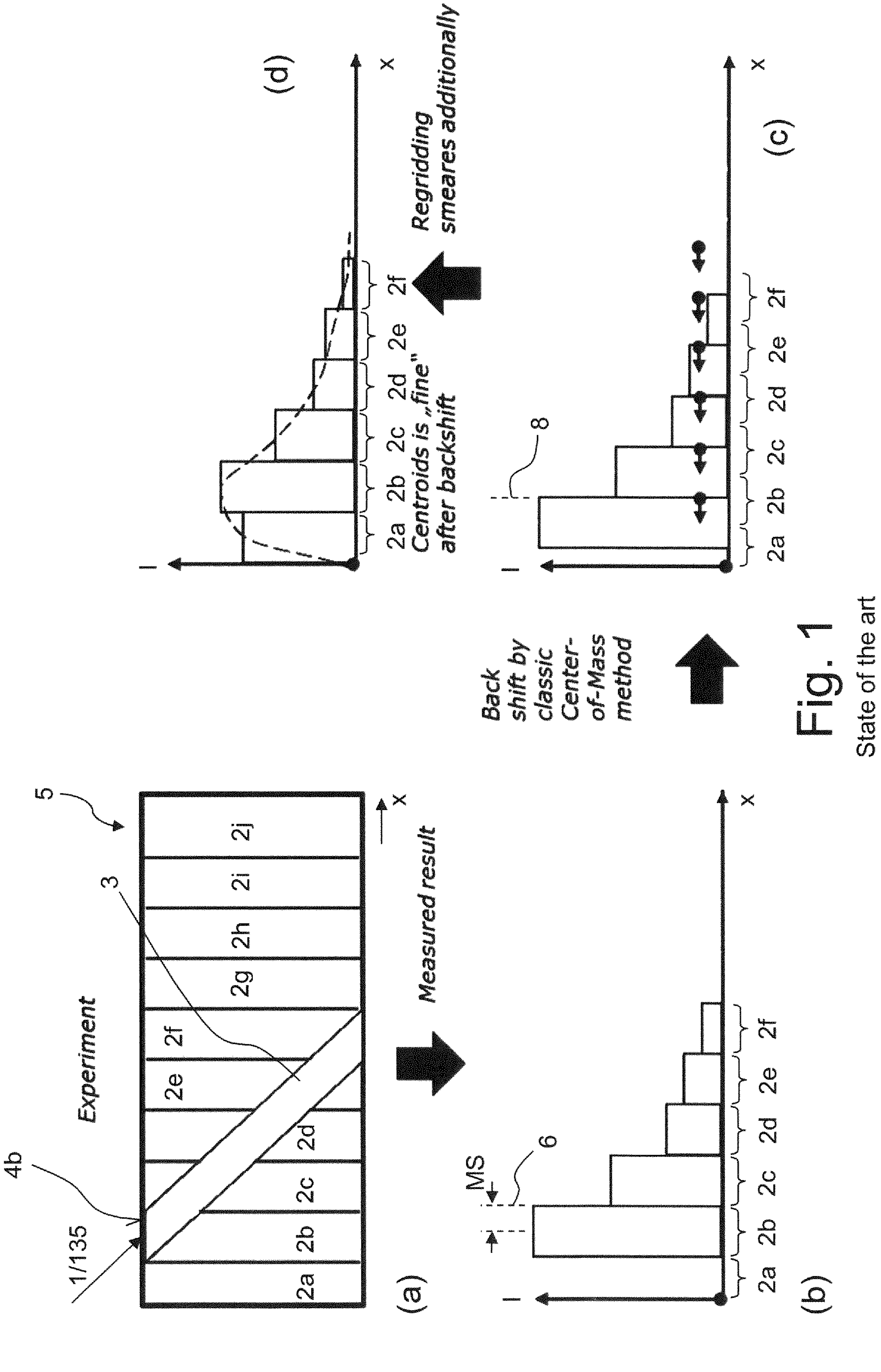


Fig. 1
State of the art

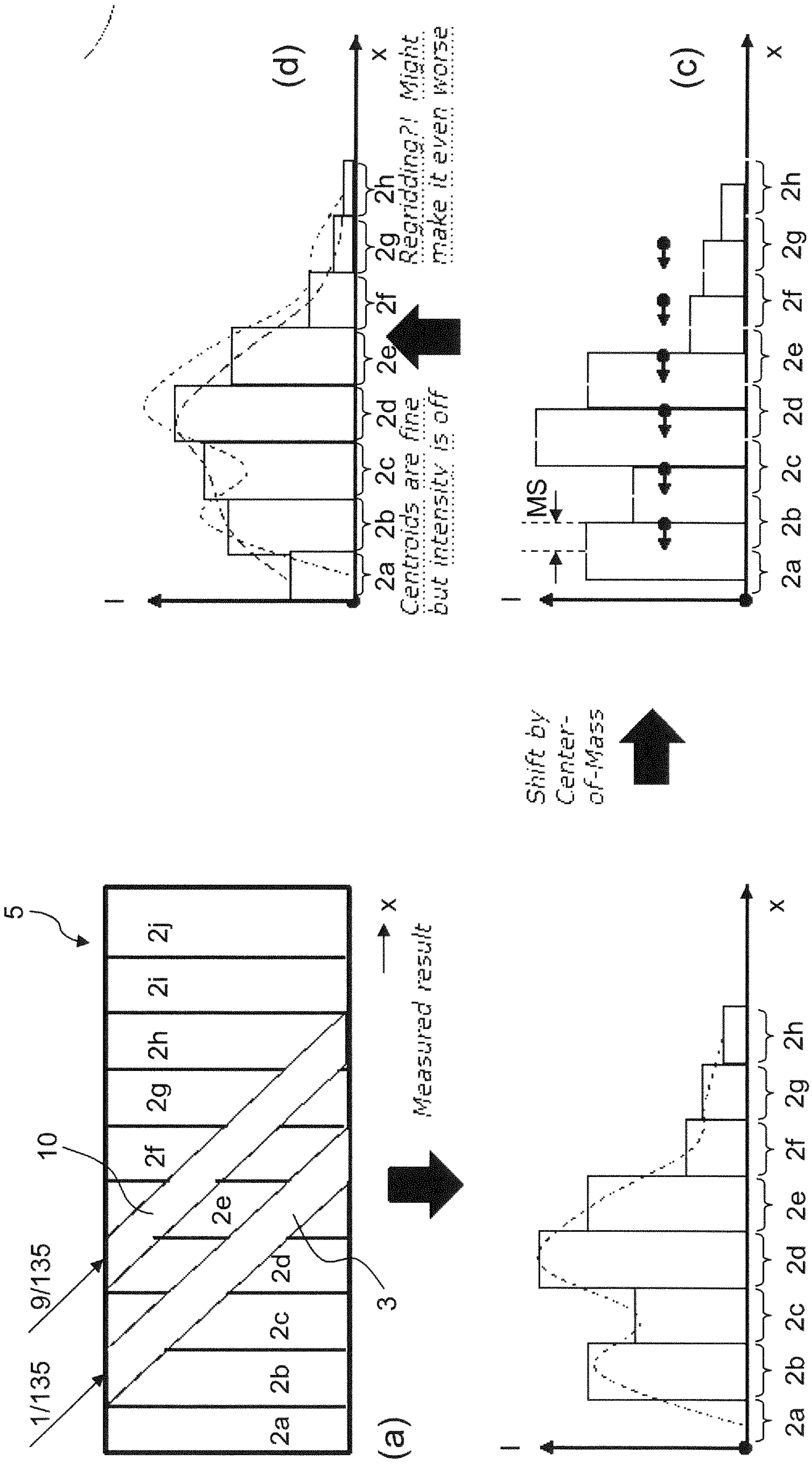


Fig. 2
State of the art

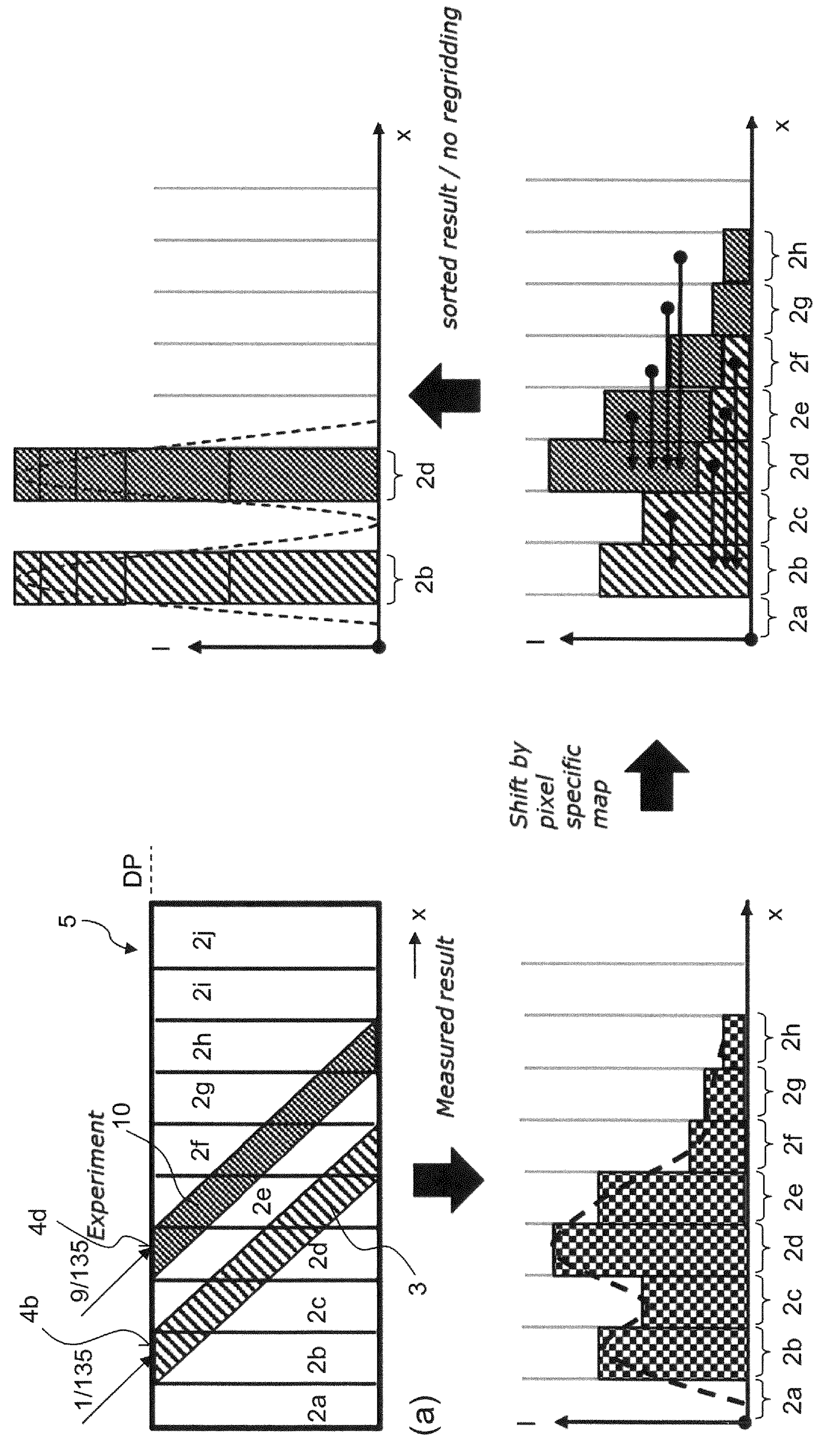
sorted result / no regridding
x
I
2b
2d
2a
2b
2c
2d
2e
2f
2g
2h
Shift by pixel specific map
DP
5
2j
2i
2h
2g
2f
2e
2d
2c
2b
2a
10
Experiment
4d
9/135
4b
1/135
3
(a)
x
Measured result
I
x
2a
2b
2c
2d
2e
2f
2g
2h

Fig. 3

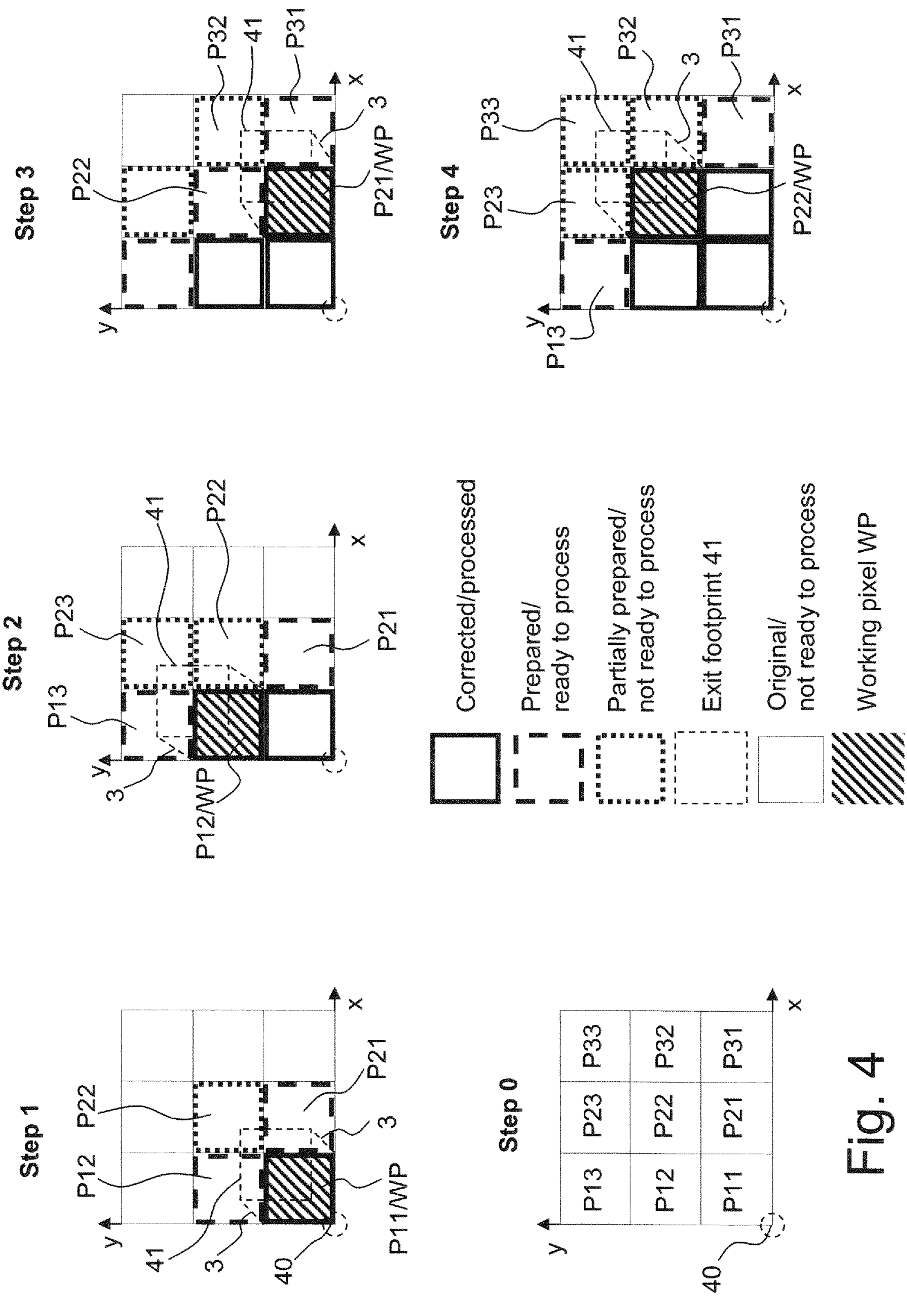
Step 1
P12
P22
P21
41
3
40
P11/WP
x
y
Step 2
P13
P23
P22
41
P21
3
P12/WP
x
y
Step 3
P22
P32
41
P31
3
P21/WP
x
y
Step 4
P23
P33
41
P32
3
P31
P22/WP
P13
x
y
Step 0
P13
P12
P11
P23
P22
P21
P33
P32
P31
40
x
y
Corrected/processed
Prepared/
ready to process
Partially prepared/
not ready to process
Exit footprint 41
Original/
not ready to process
Working pixel WP

Fig. 4

Fig. 5

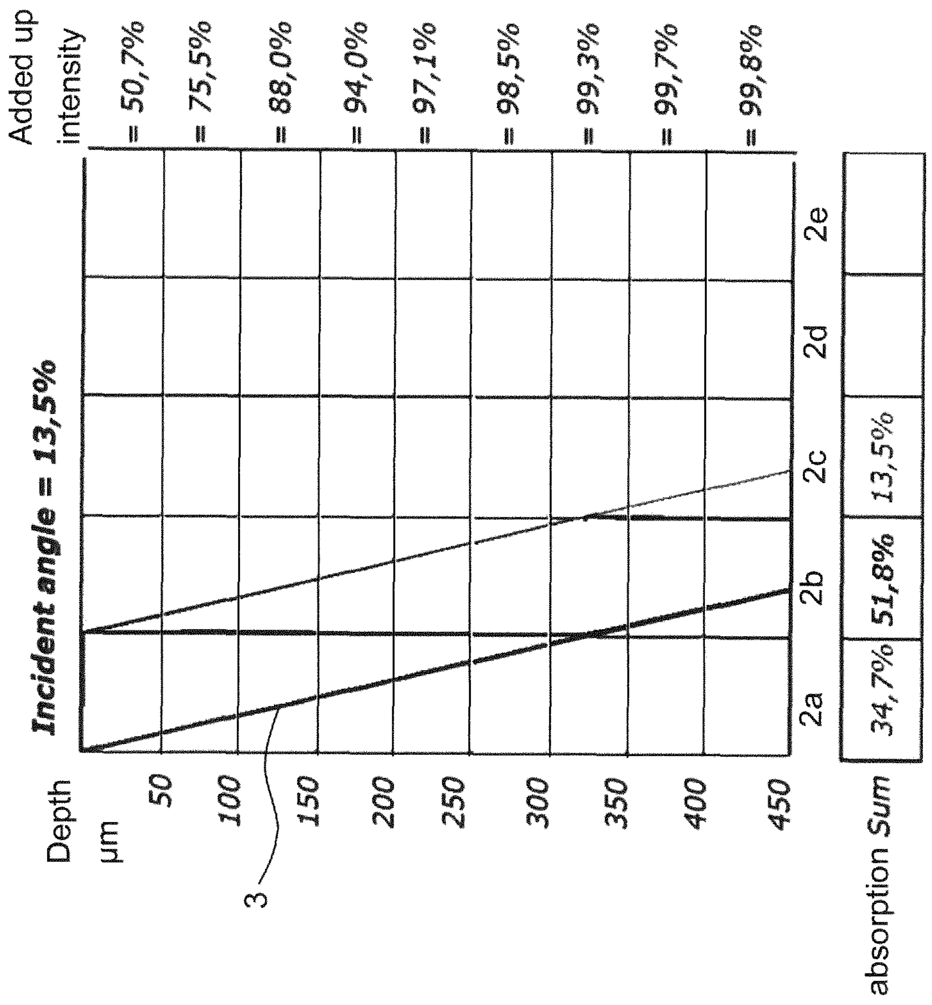
Incident angle = 13,5%
Depth
µm
50
100
150
200
250
300
350
400
450
3
2a
2b
2c
2d
2e
Added up intensity
= 50,7%
= 75,5%
= 88,0%
= 94,0%
= 97,1%
= 98,5%
= 99,3%
= 99,7%
= 99,8%
absorption Sum
34,7%
51,8%
13,5%

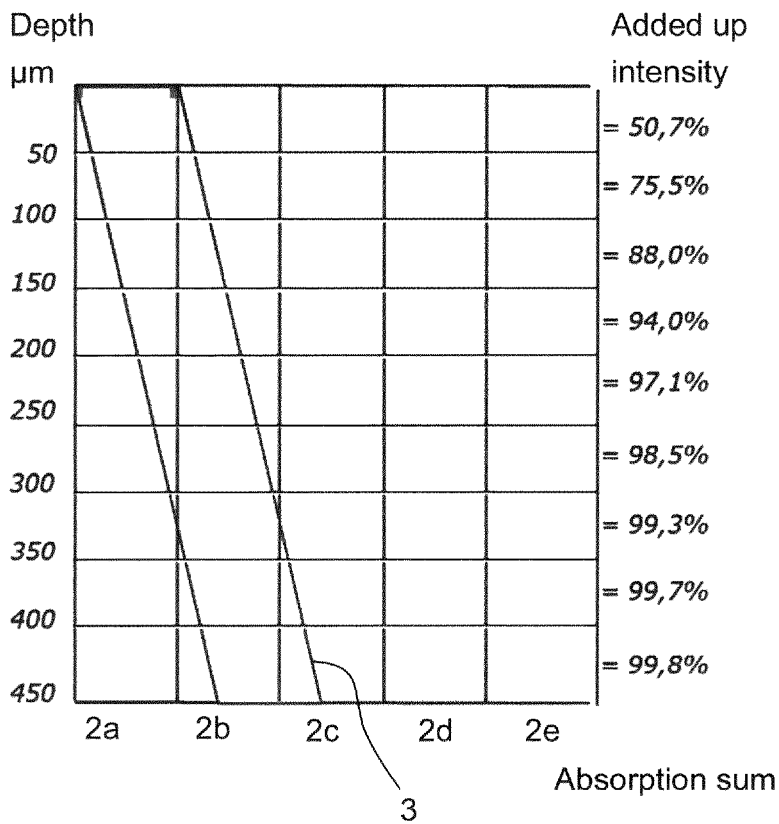


| | 2a | 2b | 2c | 2d | 2e | Remaining intensity |
|---|---|---|---|---|---|---|
| | *92* | *8* | | | | *+51,3%* |
| | *76* | *24* | | | | *+24,2%* |
| | *60* | *40* | | | | *+12,5%* |
| | *44* | *56* | | | | *+6,0%* |
| | *28* | *72* | | | | *+3,1%* |
| | *12* | *88* | | | | *+1,4%* |
| | *4* | *92* | *4* | | | *+0,7%* |
| | | *88* | *12* | | | *+0,3%* |
| | | *72* | *28* | | | *+0,2%* |
| Absorption sum | 76,8% | 23,08% | 0,12% | | | |

→ *This is a real world case szenario (with exponential absorbtion)*

→ *Center shift of **0.2332** pixels* or 17,5µm

Fig. 6

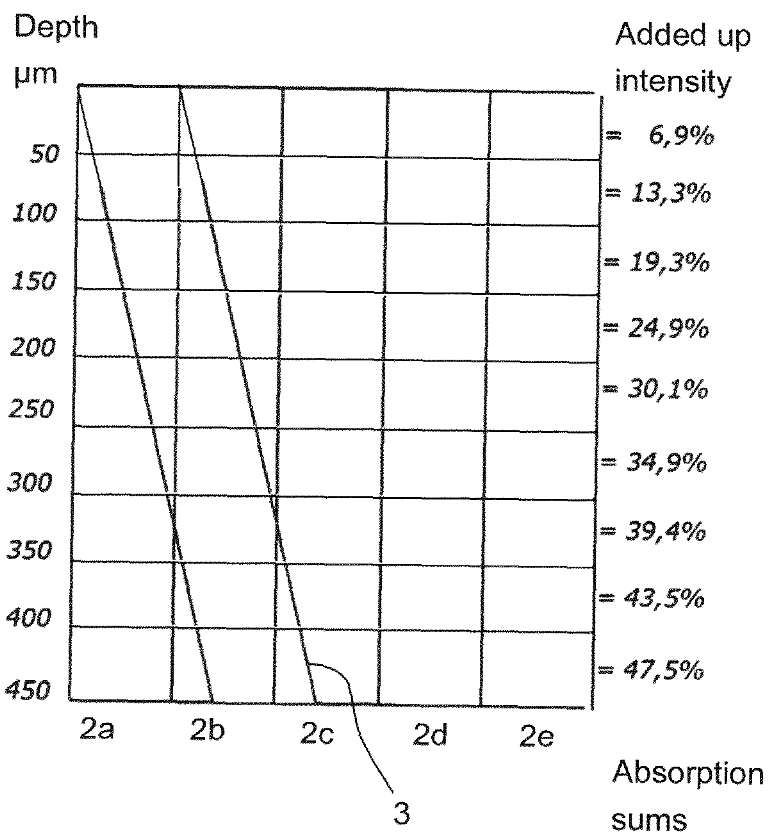


| Added up intensity | 2a | 2b | 2c | 2d | 2e | Change in absorbed intensity |
|---|---|---|---|---|---|---|
| = 6,9% | 92 | 8 | | | | +6,9% |
| = 13,3% | 76 | 24 | | | | +6,4% |
| = 19,3% | 60 | 40 | | | | +6,0% |
| = 24,9% | 44 | 56 | | | | +5,6% |
| = 30,1% | 28 | 72 | | | | +5,1% |
| = 34,9% | 12 | 88 | | | | +4,8% |
| = 39,4% | 4 | 92 | 4 | | | +4,5% |
| = 43,5% | | 88 | 12 | | | +4,1% |
| = 47,5% | | 72 | 28 | | | +4,0% |
| Absorption sums | 19,46% | 26,50% | 1,79% | | | → Absolute (for 47,5%) |
| | 40,97% | 55,79% | 3,77% | | | → Relative (for 100%) |

→ *Center shift of* 0,6386 *pixels* or 47,9µm

Fig. 7

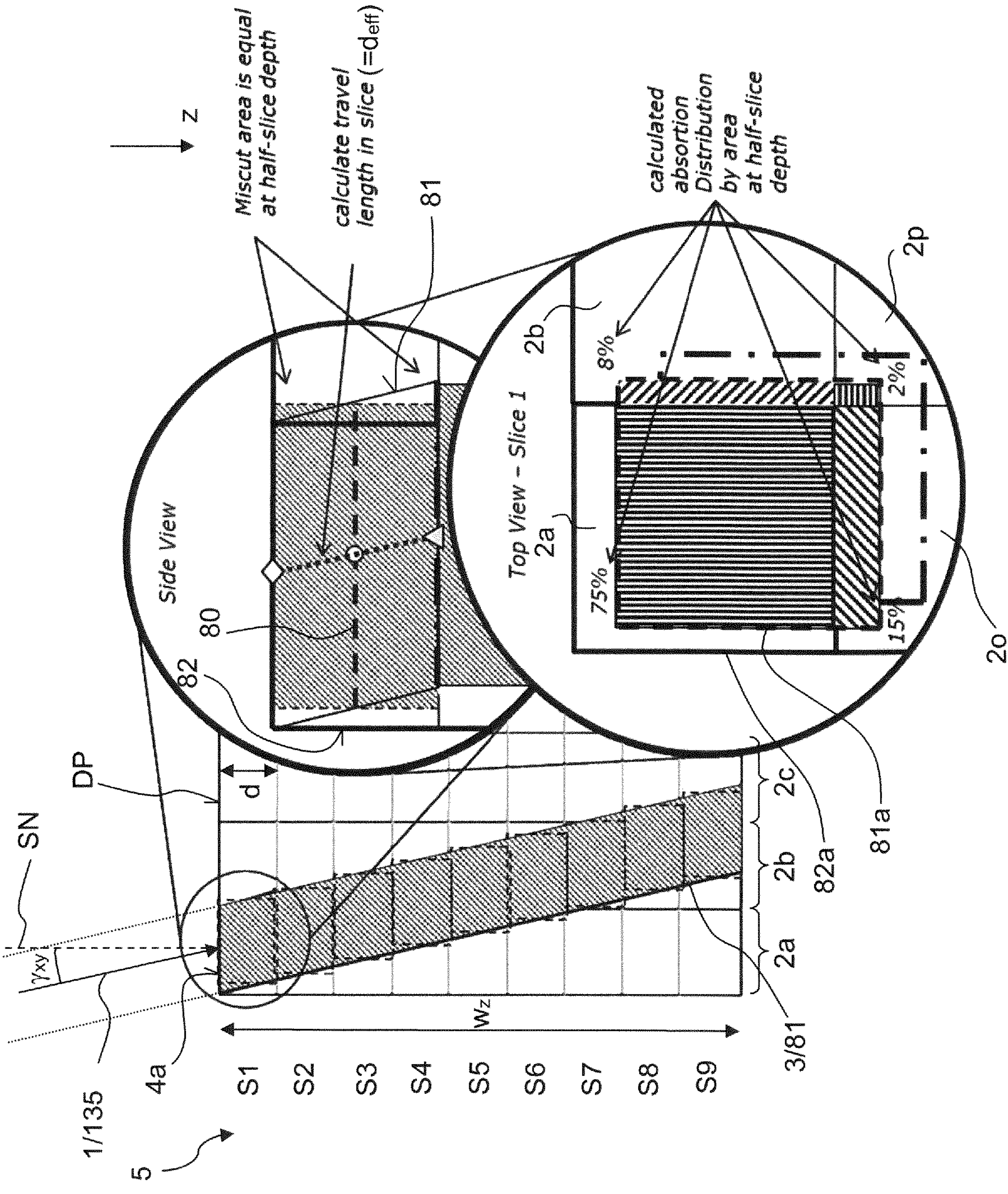
Miscut area is equal at half-slice depth
calculate travel length in slice (=deff)
z
81
Side View
80
82
Top View – Slice 1
2a
2b
2p
2o
calculated absortion Distribution by area at half-slice depth
8%
2%
75%
15%
82a
81a
SN
DP
d
γxy
1/135
4a
wz
S1
S2
S3
S4
S5
S6
S7
S8
S9
2a
2b
2c
3/81
5

Fig. 8

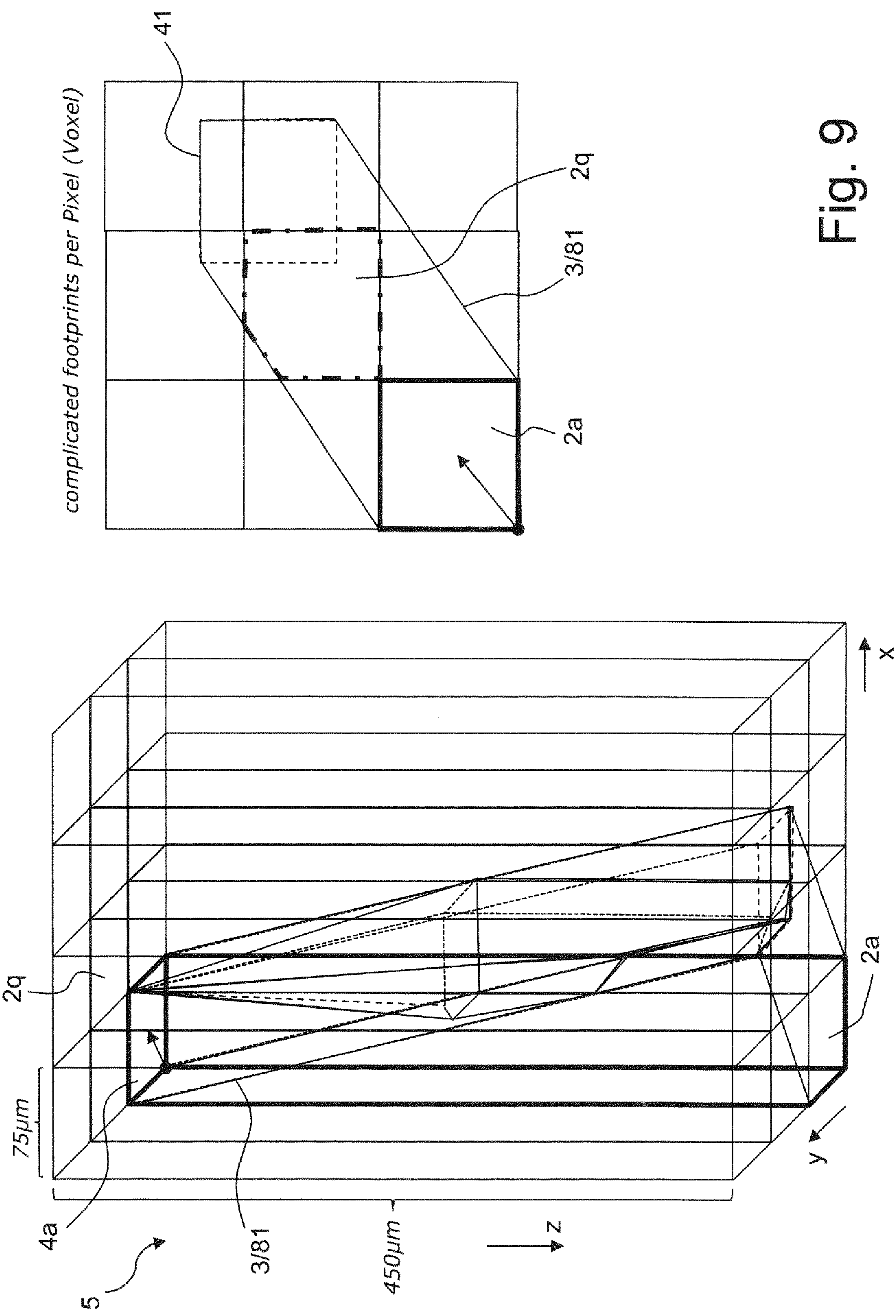
41
complicated footprints per Pixel (Voxel)
2q
3/81
2a
5
4a
75μm
450μm
z
x
y

Fig. 9

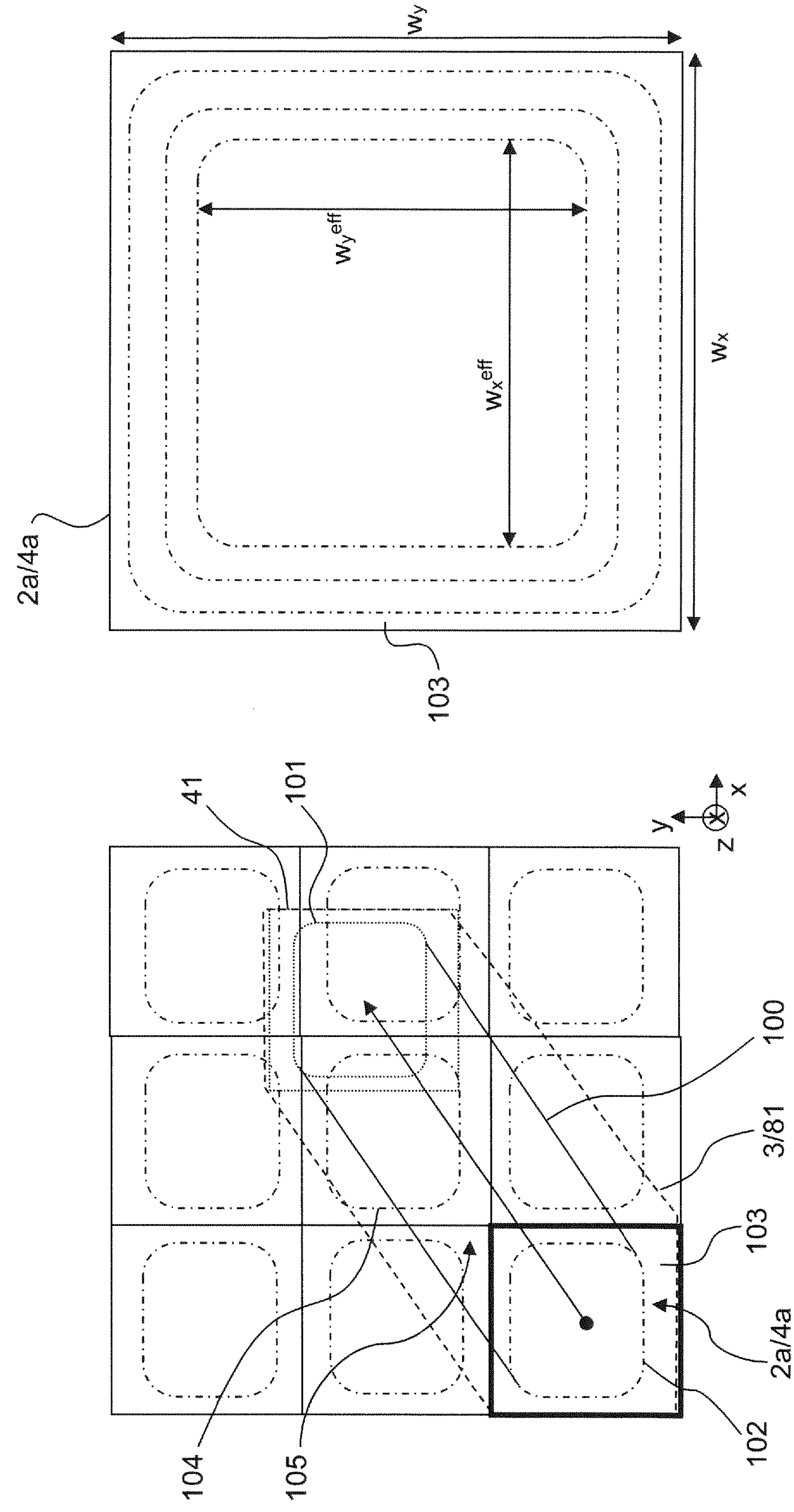
wy
wx
wy eff
wx eff
2a/4a
103
41
101
100
3/81
103
2a/4a
102
104
105
y
z
x

Fig. 10

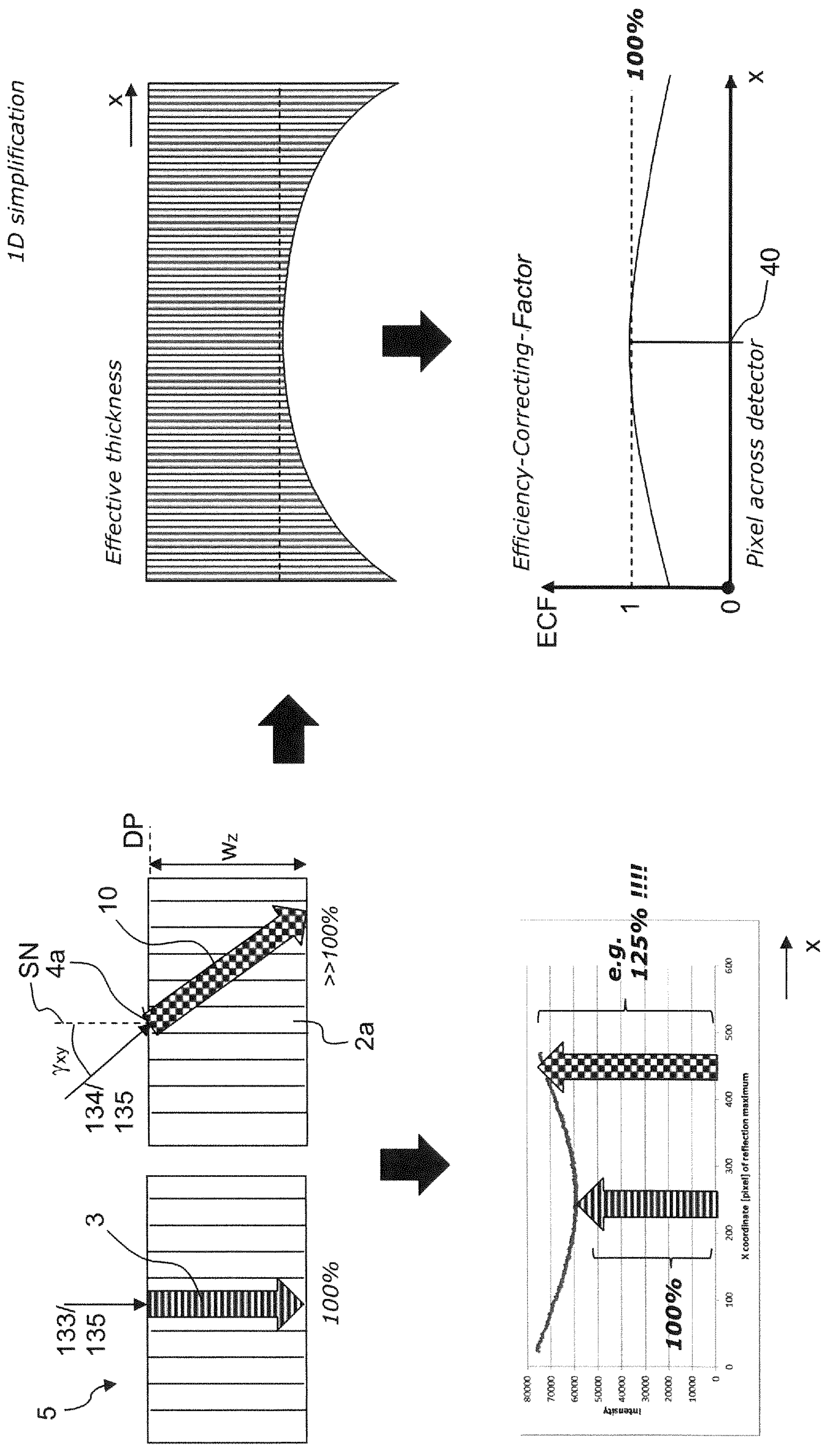
1D simplification
Effective thickness
x
Efficiency-Correcting-Factor
ECF
1
0
100%
x
Pixel across detector
40
5
133/
135
3
100%
134/
135
γxy
SN
4a
10
2a
>>100%
DP
wz
100%
e.g.
125% !!!!
x
Intensity
X coordinate [pixel] of reflection maximum
80000
70000
60000
50000
40000
30000
20000
10000
0
100
200
300
400
500
600

Fig. 11

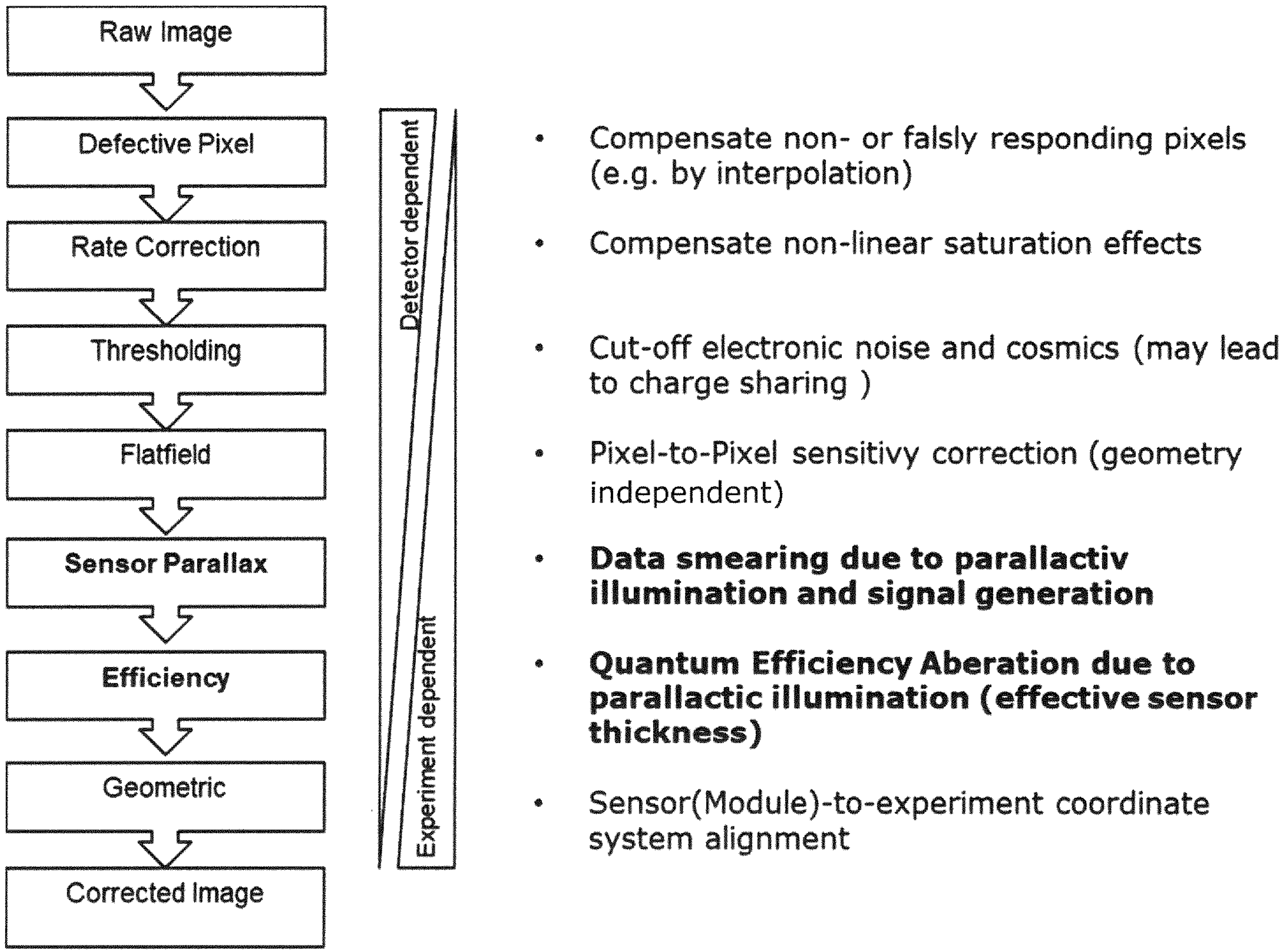
Raw Image
Defective Pixel
Rate Correction
Thresholding
Flatfield
Sensor Parallax
Efficiency
Geometric
Corrected Image
Detector dependent
Experiment dependent
Compensate non- or falsly responding pixels (e.g. by interpolation)
Compensate non-linear saturation effects
Cut-off electronic noise and cosmics (may lead to charge sharing )
Pixel-to-Pixel sensitivy correction (geometry independent)
Data smearing due to parallactiv illumination and signal generation
Quantum Efficiency Aberation due to parallactic illumination (effective sensor thickness)
Sensor(Module)-to-experiment coordinate system alignment

Fig. 12

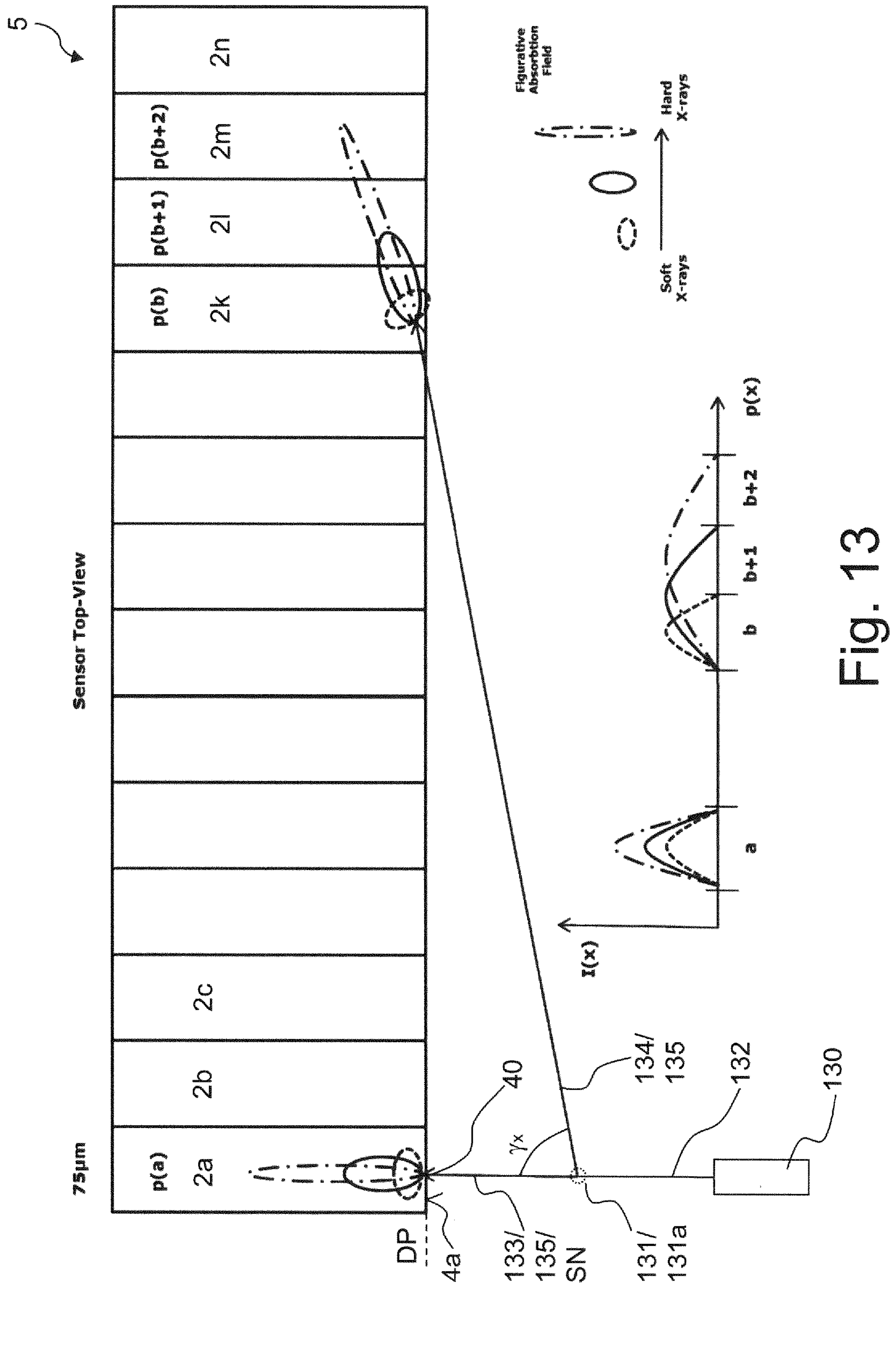
5
Sensor Top-View
75µm
p(a)
2a
2b
2c
p(b)
2k
p(b+1)
2l
p(b+2)
2m
2n
Figurative Absorbtion Field
Soft X-rays
Hard X-rays
I(x)
p(x)
a
b
b+1
b+2
DP
4a
40
γx
133/ 135/ SN
131/ 131a
134/ 135
132
130

Fig. 13

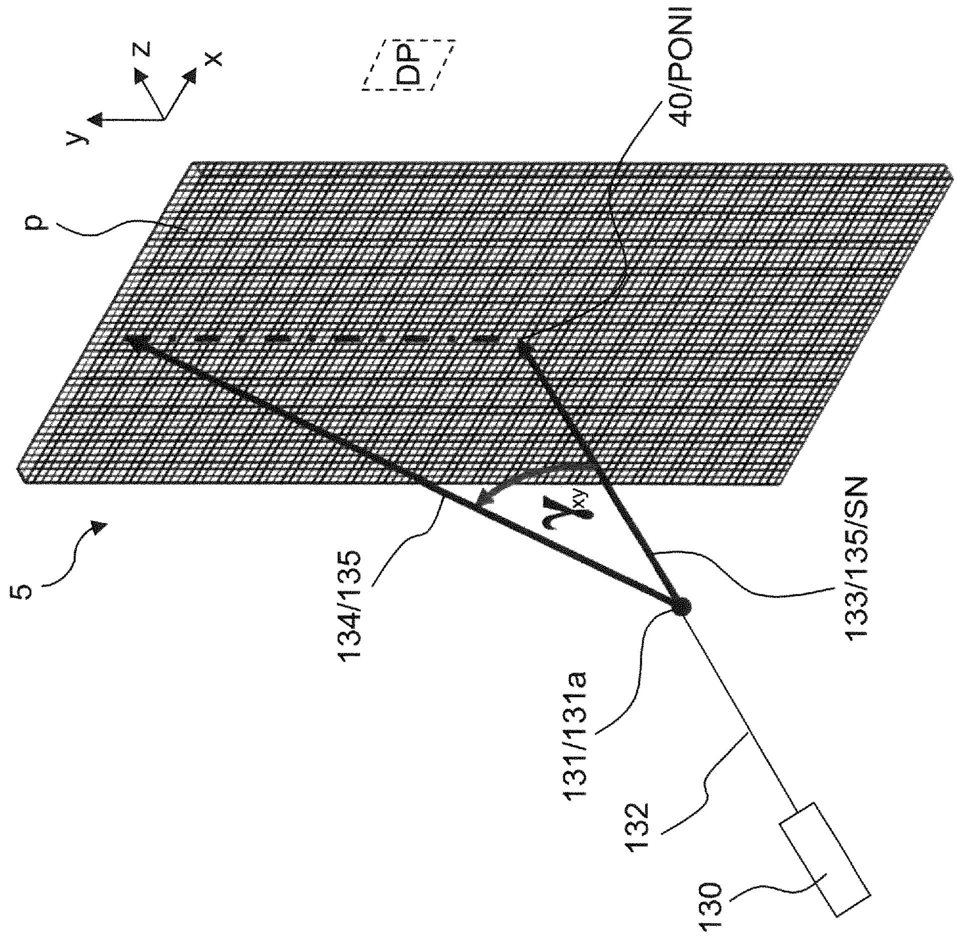


Fig. 14

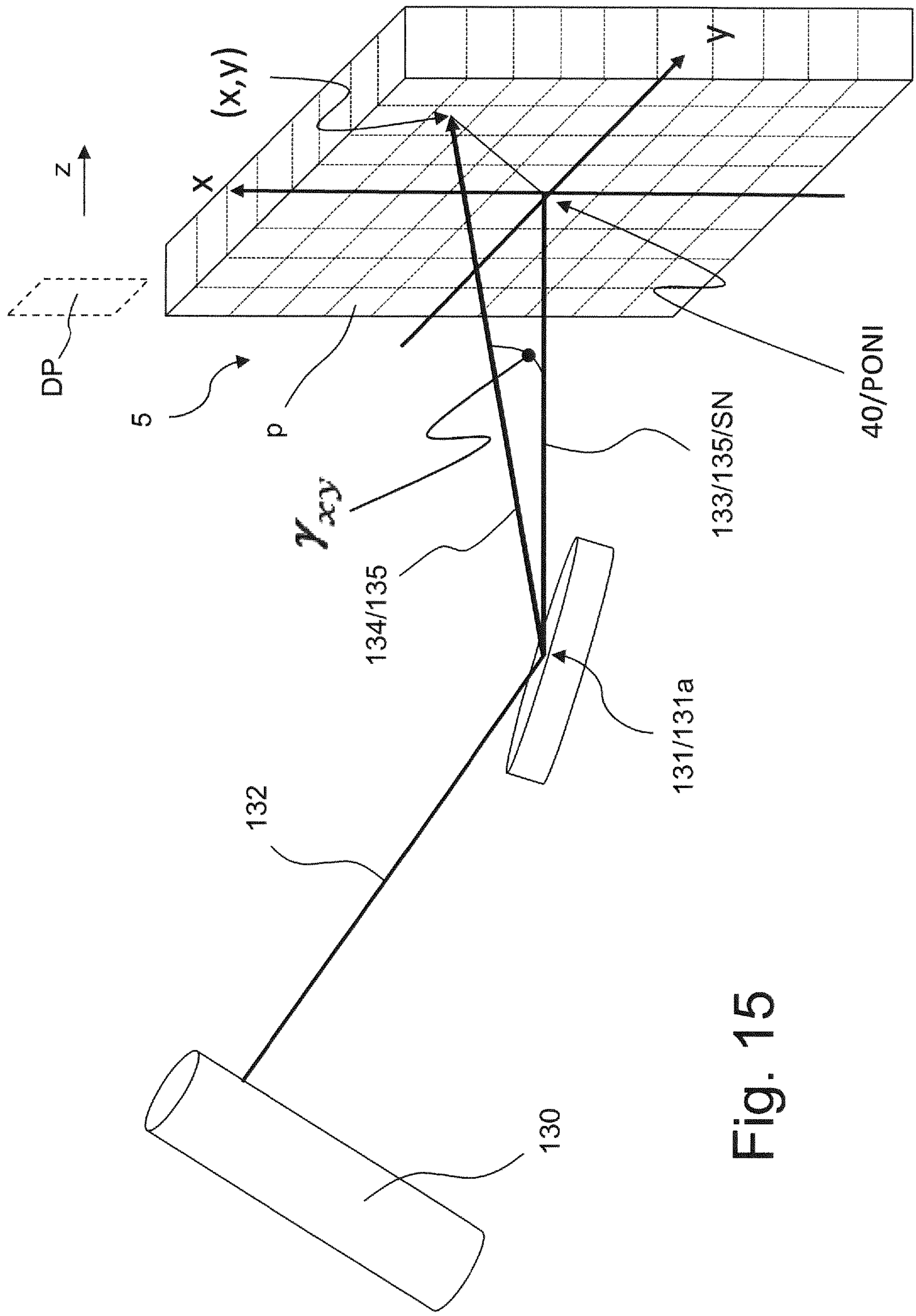


Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9835571 B2
- US 9897559 B2
- EP 3561496 A1


### Non-patent literature cited in the description


- **G. HUELSEN et al.** Distortion calibration of the PILATUS 1M detector. *Nuclear Instruments and Methods in Physics Research, Section A,* 21 August 2005, vol. 548 (3), 540-554
- **A. P. HAMMERSLEY et al.** Two-dimensional detector software: From real detector to idealised image or two-theta scan. *HIGH PRESSURE RESEARCH,* 01 January 1996, vol. 14 (4-6), 235-248
- **G. HUELSEN et al.** *Distortion calibration of the PILATUS 1M detector*
- *Pilatus on a goniometer at ID28,* 04 November 2019, https://pyfai.readthedocs.io/en/latest/usage/tutorial/ThickDetector/goniometer_i d28.html